# EUROPÄISCHE PATENTANMELDUNG

(11) **EP 4 843 703 A2**
(43) Veröffentlichungstag der Anmeldung: **25.11.2026**
(21) Anmeldenummer: 26179643.7
(22) Anmeldetag: 19.05.2026
(51) Int. Cl.: B23Q 1/03, B23Q 17/24, B23Q 1/00

(54) **MASCHINE UND VERFAHREN ZUM BEARBEITEN VON WERKSTÜCKEN**

(30) Priorität: 23.05.2025 DE 102025120303
(71) Anmelder: HOMAG GmbH, 72296 Schopfloch (DE)
(72) Erfinder: Schmeling, Jens, 72250 Freudenstadt (DE); Pannwitz, Joachim, 32760 Detmold (DE); Rempp, Friedhelm, 78073 Bad Dürrheim (DE); Schmid, Joel, 72293 Glatten (DE)
(74) Vertreter: Dürr - Corporate IP

(57) **Zusammenfassung**

Die Erfindung betrifft eine Maschine zum Bearbeiten von Werkstücken insbesondere aus Holz oder Holzwerkstoffen, wobei die Maschine eine Auflageeinrichtung für die Werkstücke umfasst, die aus einer in einer Längsrichtung und in einer dazu senkrechten Querrichtung sich erstreckenden Stützstruktur und mindestens einem auf der Auflageeinrichtung angeordnetem Haltemittel für ein Abstützen und insbesondere Fixieren der Werkstücke besteht. Die Maschine umfasst ferner eine Bearbeitungseinrichtung für eine Bearbeitung der Werkstücke, eine optische Anzeigeeinrichtung für eine Anzeige von Handhabungsaktionen für einen Bediener der Maschine in Form mindestens einer Sollposition für das mindestens ein Haltemittel, und eine Steuerungseinrichtung zum Steuern der Bearbeitungseinrichtung und der optischen Anzeigeeinrichtung. Hierbei ist die Steuerungseinrichtung eingerichtet, mindestens eine weitere vordefinierte Handhabungsaktion dem Bediener mittels der optische Anzeigeeinrichtung anzuzeigen. Die Erfindung betrifft ferner ein Verfahren zum Bearbeiten von Werkstücken insbesondere aus Holz oder Holzwerkstoffen.

## Beschreibung

Die Erfindung betrifft eine Maschine zum Bearbeiten von Werkstücken insbesondere aus Holz oder Holzwerkstoffen umfassend eine Auflageeinrichtung für die Werkstücke, wobei die Auflageeinrichtung eine in einer Längsrichtung und in einer dazu senkrechten Querrichtung sich erstreckende Stützstruktur und mindestens ein auf der Auflageeinrichtung angeordnetes Haltemittel für die Werkstücke umfasst, ferner umfassend eine Bearbeitungseinrichtung für eine Bearbeitung der Werkstücke, ferner umfassend eine optische Anzeigeeinrichtung für eine Anzeige von Handhabungsaktionen für einen Bediener der Maschine in Form mindestens einer Sollposition mindestens eines der Haltemittel, und ferner umfassend eine Steuerungseinrichtung zum Steuern der Bearbeitungseinrichtung und der optischen Anzeigeeinrichtung.

Des Weiteren betrifft die Erfindung ein Verfahren zum Bearbeiten von Werkstücken insbesondere aus Holz oder Holzwerkstoffen mit den Schritten Anzeigen mindestens einer Handhabungsaktion für einen Bediener in Form mindestens einer Sollposition mindestens eines Haltemittels für die Werkstücke einer Auflageeinrichtung, Positionieren des mindestens einen Haltemittels an der Sollposition, Positionieren des Werkstücks auf dem mindestens einen Haltemittel, und Bearbeiten des positionierten Werkstücks mittels eines Bearbeitungswerkzeugs.

Es gibt eine erste Art von Bearbeitungsmaschinen, bei denen die Einrichtung der Maschine, die Positionierung der Werkstücke und die Bearbeitung der Werkstücke komplett vollautomatisch oder weitgehend vollautomatisches erfolgt. Nachteile solcher hochautomatisierter Bearbeitungsmaschinen bestehen zum einen im Anschaffungspreis und zum anderen in der erhöhten Wahrscheinlichkeit für das Auftreten von technischen Fehlern aufgrund der vielen Stellmotoren.

Bei einer zweiten Art von Bearbeitungsmaschinen erfolgt ein größerer Teil der Einrichtung der Maschine und der Positionierung der Werkstücke manuell von einem Bediener. Der Vorteil dieser zweiten Art von Bearbeitungsmaschinen besteht darin, dass zum einen der Anschaffungspreis deutlich niedriger als bei der ersten Art von Bearbeitungsmaschinen ist. Ferner ist aufgrund weniger Technik und insbesondere weniger Stellmotoren die Wahrscheinlichkeit für technische Störungen geringer. Ein Nachteil bei dieser zweiten Art von Bearbeitungsmaschinen besteht allerdings darin, dass der Bediener bei der Ausführung der manuellen Schritte hochkonzentriert arbeiten muss, um keine Fehler zu machen, die entweder zu einem fehlerhaften bearbeiteten Werkstück führen oder gar zu einer Beschädigung der Bearbeitungsmaschine. Aufgrund von Fachkräftemangel wird es für Unternehmen immer schwieriger, geeignetes Personal zum Bedienen der zweiten Art von Bearbeitungsmaschinen zu finden.

Es ist daher eine Aufgabe der vorliegenden Erfindung, die Bedienung einer Maschine zum Bearbeiten von Werkstücken weiter zu vereinfachen und die Fehlerhäufigkeit bei der Bedienung der Maschine zu verringern. Diese Aufgabe wird erfindungsgemäß gelöst durch eine Maschine gemäß Anspruch 1 und ein Verfahren gemäß Anspruch 10.

Die erfindungsgemäße Maschine ist hierbei derart konfiguriert bzw. eine Steuerungseinrichtung der Maschine ist eingerichtet, mindestens eine weitere vordefinierte Handhabungsaktion dem Bediener mittels einer optischen Anzeigeeinrichtung der Maschine anzuzeigen

Das erfindungsgemäße Verfahren umfasst hierzu weitere Schritte wie ein Anzeigen mindestens einer weiteren weiteren Handhabungsaktion für den Bediener und ein Durchführen der mindestens einer weiteren weiteren angezeigten Handhabungsaktion durch den Bediener.

Die mindestens eine weitere vordefinierte Handhabungsaktion beruht insbesondere auf einer Anzeige einer der folgenden Informationen: eine erste Soll-Position auf einer Auflageeinrichtung der Maschine für ein Rohteil eines Werkstücks und eine zweite Ziel-Position auf der Auflageeinrichtung für ein Fertigteil des Werkstücks, eine Soll-Position auf der Auflageeinrichtung für ein Distanzwerkstück zwischen der Position mindestens eines Anschlag der Auflageeinrichtung und einer Soll-Position eines Werkstück, eine Soll-Art eines Aufsatzelementes eines Anschlags der Auflageeinrichtung, eine Soll-Position eines abragenden Distanzteils eines Anschlags der Auflageeinrichtung, eine Soll-Winkelposition des mindestens einen Haltemittels, eine Soll-Drehachse zum Wenden eines Werkstücks, ein Erreichen bzw. ein Nicht-Erreichen einer vordefinierten Fixierkraft bei einem Haltemittel, ein Erfüllen bzw. ein Nicht-Erfüllen einer vordefinierten Soll-Ladung einer Batterie bzw. eines Akkus bei einem Haltemittel, ein Überschreiten bzw. ein Nicht-Überschreiten einer vordefinierten maximalen Schwingungsamplitude eines Werkstücks im Bereich eines Haltemittels, eine Soll-Position , die ein Bediener mit einem Körperteil einnehmen soll, so dass eine Vakuumansaugung für ein Werkstück an zuordneten Konsolen und zugeordneten Haltemitteln aktiviert bzw. deaktiviert wird, eine Soll-Position, die ein Bediener mit einem Körperteil einnehmen soll, so dass mindestens ein Anschlag für ein Werkstück aktiviert bzw. deaktiviert wird, eine Soll-Position, die ein Bediener mit einem Körperteil einnehmen soll, so dass mindestens eine Einlegehilfsvorrichtung für ein Werkstück aktiviert bzw. deaktiviert wird, ein Erreichen bzw. ein Nicht-Erreichen eines vordefinierten Vakuumluftdrucks bei einer Konsole. eine Restlaufzeit eines aktiven Bearbeitungsprogramms der Maschine bevorzugt in Form eines Fortschrittbalkens.

Eine solche Ausgestaltung der Maschine bzw. des Verfahrens reduziert zum einen Fehler bei der Bedienung der Maschine bzw. bei der Ausführung des Verfahrens. Zum anderen kann zur Bedienung der Maschine bzw. zur Ausführung des Verfahrens weniger gut qualifiziertes Personal eingesetzt werden, was zum einen den Mangel an qualifiziertem Personal umgeht und zum anderen zu einer Kostenreduktion bei der Bearbeitung von Werkstücken mittels der Maschine bzw. gemäß dem Verfahren führt.

Weitere Merkmale und Vorteile der Erfindung ergeben sich aus den weiteren abhängigen Vorrichtungsansprüchen und den weiteren abhängigen Verfahrensansprüchen sowie aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und sind derart dargestellt, dass die erfindungsgemäßen Besonderheiten deutlich sichtbar gemacht werden können. Die einzelnen beschriebenen Merkmale können je einzeln für sich oder zu mehreren in beliebigen Kombinationen bei verschiedenen Ausführungsbeispielen der Erfindung verwirklicht sein.

Bevorzugte Ausführungsbeispiele der Erfindung sind in den Figuren der Zeichnung dargestellt und werden in der nachfolgenden Beschreibung näher erläutert, wobei sich gleiche Bezugszeichen auf gleiche oder ähnliche oder funktional gleiche Vorrichtungskomponenten oder Verfahrensschritte beziehen.

Es zeigen:
- **Fig. 1:**: Schematische Darstellung einer Maschine zum zerspanenden Bearbeiten von Werkstücken insbesondere aus Holz oder Holzwerkstoffen mit einer Auflageeinrichtung, einer Bearbeitungseinrichtung, einer optischen Anzeigeeinrichtung und einer Steuerungseinrichtung
- **Fig. 2:**: Schematische Darstellung einer bevorzugten Ausführungsform der Auflageeinrichtung von **Fig. 1** mit Lichtbändern als die optische Anzeigeeinrichtung
- **Fig. 3:**: Schematische Darstellung eines Ausschnitts der Auflageeinrichtung von **Fig. 2** zum Anzeigen mindestens einer ersten Position auf der Auflageeinrichtung eines Rohteils eines Werkstücks und mindestens einer zweiten Position auf der Auflageeinrichtung eines Fertigteils des Werkstücks
- **Fig. 4:**: Schematische Darstellung eines Ausschnitts der Auflageeinrichtung von **Fig. 2** zum Anzeigen einer Position auf der Auflageeinrichtung eines bevorzugt vom Bediener zu haltenden Distanzwerkstücks für ein Werkstück in Bezug auf mindestens einen Anschlag der Auflageeinrichtung
- **Fig. 5a:**: Schematische Darstellung eines Ausschnitts der Auflageeinrichtung von **Fig. 2** zum Anzeigen einer ersten Art eines Aufsatzes eines Anschlags der Auflageeinrichtung
- **Fig. 5b:**: Seitenansicht des Anschlags mit der ersten Art eines Aufsatzes von **Fig. 5a**
- **Fig. 5c:**: Schematische Darstellung eines Ausschnitts der Auflageeinrichtung von **Fig. 2** zum Anzeigen einer zweiten Art eines Aufsatzes eines Anschlags der Auflageeinrichtung
- **Fig. 5d:**: Seitenansicht des Anschlags mit der zweiten Art eines Aufsatzes von **Fig. 5c**
- **Fig. 6a:**: Seitenansicht von oben auf ein Haltemittel der Auflageeinrichtung von **Fig. 1** mit einer Drehvorrichtung und einer Codierung basierend auf Leuchteffekten der optischen Anzeigeeinrichtung für mehrere Drehwinkelposition des Haltemittels
- **Fig. 6b:**: Schematische Darstellung eines Ausschnitts der Auflageeinrichtung von **Fig. 2** zum Anzeigen einer Codierung für einen einzustellenden Drehwinkels des auf der mindestens einen Konsole (101, 102) angeordneten Haltemittels (1012, 1021)
- **Fig. 7a:**: Schematische Darstellung eines Ausschnitts der Auflageeinrichtung von **Fig. 2** zum Anzeigen einer Drehachse zum Wenden eines Werkstücks zu einem ersten Zeitpunkt
- **Fig. 7b:**: Schematische Darstellung eines Ausschnitts der Auflageeinrichtung von **Fig. 2** zum Anzeigen einer Drehachse zum Wenden eines Werkstücks zu einem zweiten Zeitpunkt
- **Fig. 8:**: Ablaufdiagramm eines Verfahrens zum Bearbeiten von Werkstücken insbesondere aus Holz oder Holzwerkstoffen
- **Fig. 9:**: Schematische Darstellung einer weiteren bevorzugten Ausführungsform der Auflageeinrichtung von **Fig. 1** mit Lichtbändern als die optische Anzeigeeinrichtung

Die vorliegende Erfindung wird im Folgenden unter Bezugnahme auf die beigefügte Zeichnung näher beschrieben. Es ist nicht beabsichtigt, die Erfindung auf die dargestellten Ausführungsformen zu beschränken; vielmehr sollen diese Ausführungsformen dem Fachmann die Erfindung verständlich und vollständig offenbaren. In den Figuren der Zeichnung beziehen sich gleiche Nummern durchweg auf gleiche Elemente. Die Dicken und Abmessungen einiger Komponenten können aus Gründen der Übersichtlichkeit übertrieben dargestellt sein.

Sofern nicht anders definiert, haben alle hierin verwendeten Begriffe (einschließlich technischer und wissenschaftlicher Begriffe) die gleiche Bedeutung, wie sie von einem Fachmann auf dem Gebiet, zu dem diese Erfindung gehört, gemeinhin verstanden wird. Es versteht sich ferner, dass Begriffe, wie sie in allgemein gebräuchlichen Wörterbüchern definiert sind, so ausgelegt werden sollten, dass sie eine Bedeutung haben, die mit ihrer Bedeutung im Kontext des betreffenden Fachgebiets übereinstimmt, und dass sie nicht in einem idealisierten oder übermäßig formalen Sinne ausgelegt werden, es sei denn, dies ist hier ausdrücklich definiert.

Darüber hinaus können hier der Einfachheit halber räumlich relative Begriffe wie "unter", "unten", "über", "oben" und dergleichen verwendet werden, um die Beziehung eines Elements oder Merkmals zu einem anderen Element oder Merkmal zu beschreiben, wie in den Figuren dargestellt. Es versteht sich, dass die räumlich relativen Begriffe neben der in den Figuren dargestellten Ausrichtung auch andere Ausrichtungen insbesondere des nachfolgend beschriebenen Handhabungsaggregats im Gebrauch oder Betrieb umfassen sollen. Wenn beispielsweise das Handhabungsaggregat in den Figuren umgedreht wird, würden Elemente, die als "unter" oder "unterhalb" anderer Elemente oder Merkmale beschrieben werden, dann "über" oder "oberhalb" der anderen Elemente oder Merkmale ausgerichtet sein. Somit kann der beispielhafte Begriff "unter" sowohl eine Ausrichtung über als auch unter umfassen. Insbesondere kann die nachfolgend beschriebene Grundstruktur nicht nur auf einer horizontalen ebenen Fläche aufliegen, sondern auch anders angeordnet sein (z.B. auf einer vertikalen ebenen Fläche stehend befestigt sein oder in beliebigen anderen geneigten und/oder verdrehten Ausrichtungen zwischen einer liegenden Anordnung und einer stehenden Anordnung angeordnet sein) und die hier verwendeten räumlich relativen Deskriptoren entsprechend interpretiert werden.

Die hier verwendete Terminologie dient nur der Beschreibung bestimmter Ausführungsformen und ist nicht als Einschränkung der Erfindung zu verstehen. Die hier verwendeten Singularformen "ein", "eine", "das", "der" und "die" schließen auch die Pluralformen ein, sofern aus dem Kontext nicht eindeutig etwas anderes hervorgeht. Es versteht sich ferner, dass die Begriffe "umfasst" und/oder "enthaltend", wenn sie in dieser Beschreibung verwendet werden, das Vorhandensein bestimmter Merkmale, ganzer Zahlen, Schritte, Operationen, Elemente und/oder Komponenten spezifizieren, jedoch nicht das Vorhandensein oder die Hinzufügung eines oder mehrerer anderer Merkmale, ganzer Zahlen, Schritte, Operationen, Elemente, Komponenten und/oder Gruppen davon ausschließen, und/oder Gruppen davon. Der hier verwendete Ausdruck "und/oder" schließt alle Kombinationen von einem oder mehreren der aufgeführten Merkmale ein. Die Begriffe "angebracht", "verbunden", "zusammengeschaltet", "kontaktierend", "montiert" und dergleichen können entweder eine direkte oder indirekte Befestigung oder einen Kontakt zwischen Elementen bedeuten, sofern nicht anders angegeben.

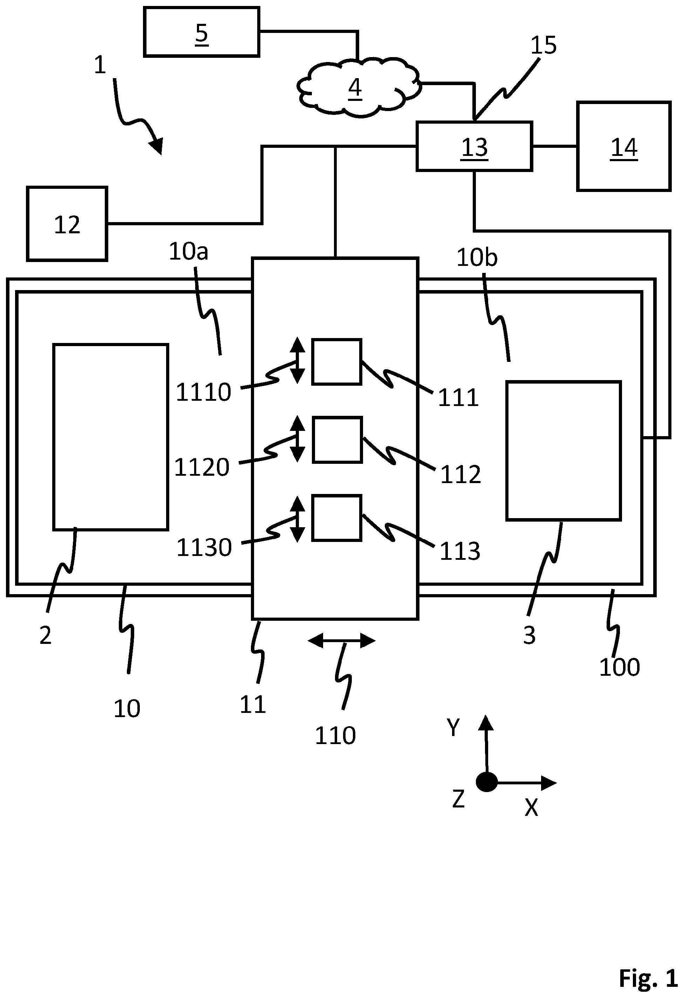

**Fig. 1** zeigt schematisch eine Maschine 1 zum Bearbeiten von Werkstücken 2, 3 insbesondere aus Holz oder Holzwerkstoffen in einer ersten bevorzugten Ausführungsform. Die Maschine 1 umfasst eine Auflageeinrichtung 10 für die Werkstücke 2, 3, eine Bearbeitungseinrichtung 11 für eine Bearbeitung der Werkstücke 2, 3, eine optische Anzeigeeinrichtung 12 für eine Anzeige von Handhabungsaktionen, die ein Bediener der Maschine 1 für die Bearbeitung der Werkstücke 2, 3 durchzuführen hat, und mindestens eine Steuerungseinrichtung 13 zum Steuern der Bearbeitungseinrichtung 11 und der optischen Anzeigeeinrichtung 12.

Die Auflageeinrichtung 10 umfasst eine in einer Längsrichtung X und in einer dazu senkrechten Querrichtung Y sich erstreckende Stützstruktur 100. Die Stützstruktur 100 ist beispielsweise ein auf einer Standfläche der Maschine 1 montierter Rahmen, der die Auflageeinrichtung 10 trägt und für den Bediener der Maschine 1 eine ergonomische Arbeitshöhe bereitstellt.

Die Auflageeinrichtung 10 ist bevorzugt in einen ersten Teilbereich 10a für die Auflage mindestens eines ersten Werkstücks 2 und einen zweiten Teilbereich 10b für die Auflage mindestens eines zweiten Werkstücks 3 unterteilt, wobei der erste Teilbereich 10a und der zweite Teilbereich 10b bevorzugt in der Längsrichtung X nacheinander angeordnet sind.

Die Bearbeitungseinrichtung 11 ist bevorzugt als Portal ausgestaltet, das in der Längsrichtung X über die Auflageeinrichtung 10 verfahren werden kann, was durch einen Pfeil 110 angedeutet ist. Die Bearbeitungseinrichtung 11 umfasst mindestens ein Bearbeitungswerkzeug 111, 112, 113 wie beispielsweise ein Zerspanungswerkzeug wie einen Bohrer oder einen Fräser oder eine Säge, ein Kantenanleimaggregat, eine Beschichtungseinrichtung, eine Druckeinrichtung, um z.B. den Kantenbereich eines Werkstücks zu bedrucken, Befestigungseinrichtung zum Verbinden von Werkstücken, eine Reinigungseinrichtung zum Reinigen von Werkstücken, eine Markierungseinrichtung zum Markieren von Werkstücken mit Informationen für einen Bediener der Maschine 1. Das mindestens eine Bearbeitungswerkzeug 111, 112, 113 ist bevorzugt in der Querrichtung Y und der Höhenrichtung Z bevorzugt automatisiert verfahr angeordnet, um verschiedene Bereiche eines Werkstücks anfahren zu können und um zu dem Werkstück zugestellt und vom Werkstück wieder wegbewegt zu werden. Die Verfahrbarkeit in der Querrichtung Y ist in der Fig. 1 durch Pfeile 1110, 1120, 1130 angedeutet.

Die Verfahrbarkeit der Bearbeitungseinrichtung 11 und die Aufteilung der Auflageeinrichtung 10 in den ersten Teilbereich 10a und den zweiten Teilbereich 10b erlauben es, dass die Bearbeitungseinrichtung 11 Werkstücke in einem der beiden Teilbereiche 10a, 10b bearbeitet, während der Bediener der Maschine 1 den anderen Teilbereich umrüstet, also fertig bearbeitete Werkstücke entnimmt, Einstellungen an dem betreffenden Teilbereich für die Aufnahme neuer Werkstücke vornimmt und die neuen Werkstücke auf dem betreffenden Teilbereich positioniert.

Die optische Anzeigeeinrichtung 12 ist beispielsweise ein Monitor, eine Laserprojektionseinrichtung, ein Lichtband oder ein Leuchtdrucktaster. Die optische Anzeigeeinrichtung 12 kann auch aus einer Kombination der genannten optischen Anzeigen bestehen.

Die Maschine 1 kann eine solche Laserprojektionseinrichtung beispielsweise oberhalb der Auflageeinrichtung 10 angeordnet umfassen. Zusätzlich oder alternativ kann die Maschine 1 einen oder mehrere der Leuchtdrucktaster im ersten Teilbereich 10a und im zweiten Teilbereich 10b der Auflageeinrichtung 10 bevorzugt angeordnet in Handhöhe des Bedieners umfassen. Einer oder mehrere Leuchtdrucktaster können zusätzlich an einer Umhausung der Maschine 1 angeordnet sein.

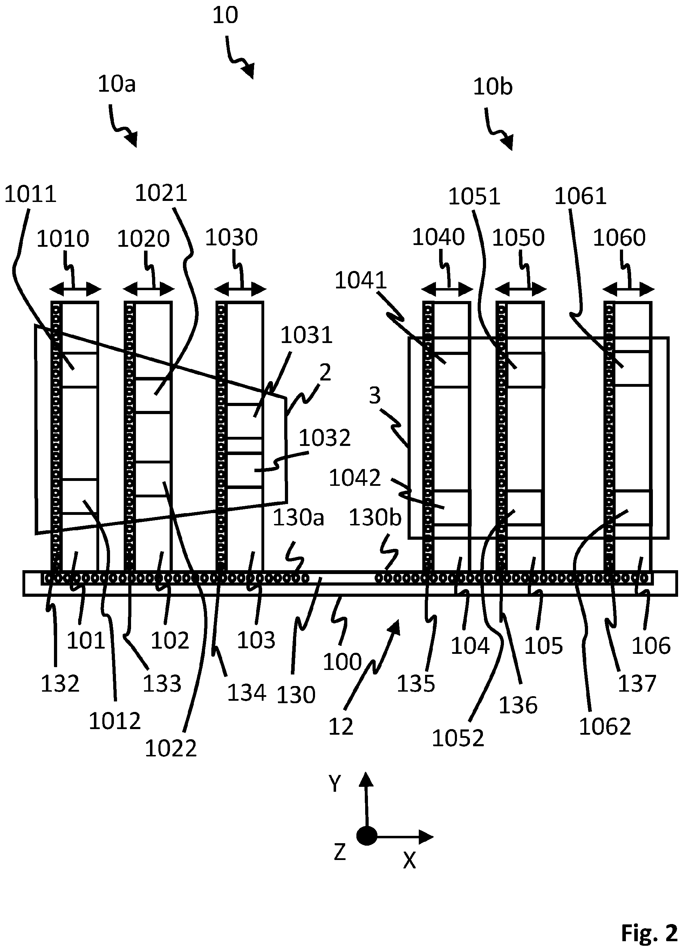

Die Variante mit dem Lichtband wird in Bezug auf die Fig. 2 detaillierter beschrieben.

Die optische Anzeigeeinrichtung 12 ist konfiguriert, mindestens einen der folgenden optischen Leuchteffekte für den Bediener der Maschine 1 zu erzeugen:
- erste Leuchteffekte mit unterschiedlichen Helligkeiten,
- zweite Leuchteffekte mit unterschiedlichen Farben,
- dritte Leuchteffekte mit unterschiedlichen Blinkmustern.

Das gleichzeitige Anzeigen von mehreren dieser Leuchteffekte kann durch verschiedene Leuchtmittel erfolgen, wobei als solche Leuchtmittel beispielsweise verschiedene Anzeigebereiche auf einem Monitor oder verschiedene mit Licht bestrahlte Stellen auf der Auflageeinrichtung mittels einer Laserprojektionseinrichtung oder verschiedene Glühbirnen oder Leuchtdioden eines Lichtbands zu verstehen sind.

Die optische Anzeigeeinrichtung 12 ist insbesondere eingerichtet, sichtbare Strahlung in mindestens zwei Spektralbereichen abzustrahlen wobei ein Abstand der mindestens zwei Spektralbereiche mindestens 30 nm, bevorzugt mindestens 50 nm und weiter bevorzugt mindestens 75 nm beträgt.

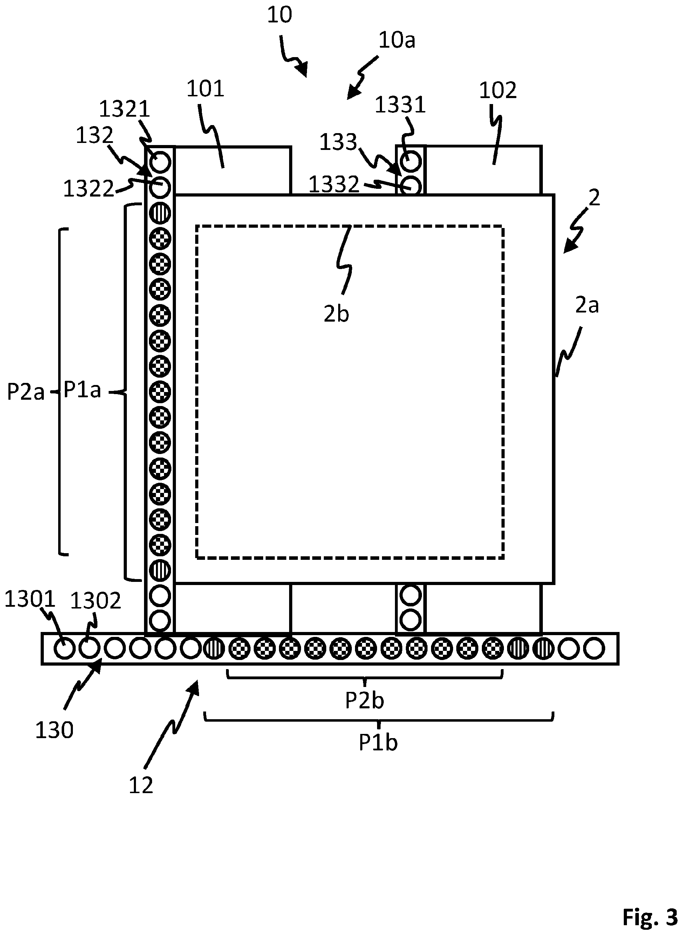

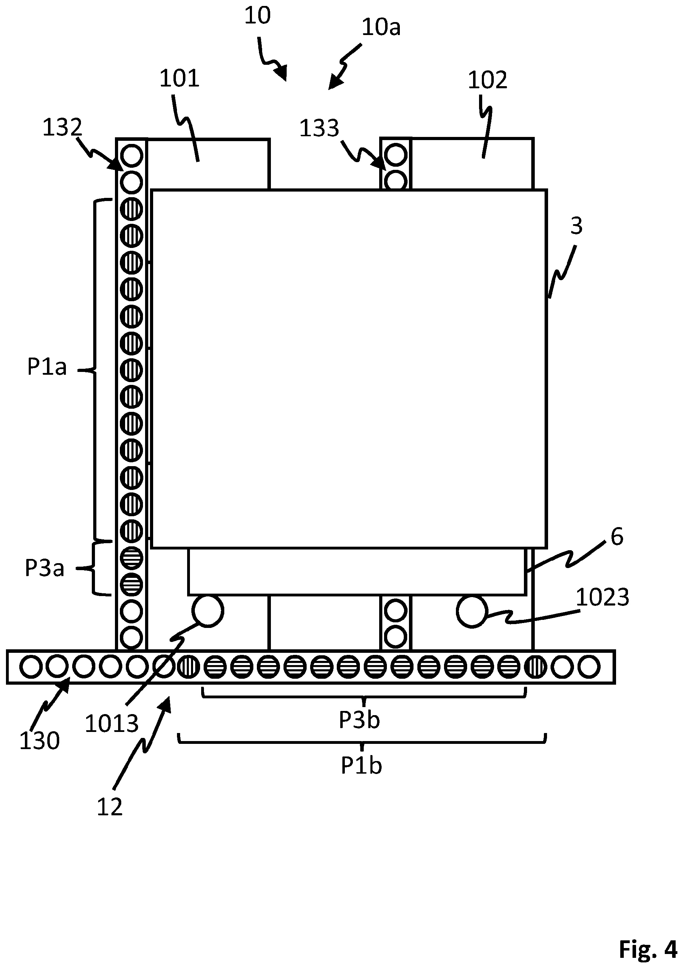

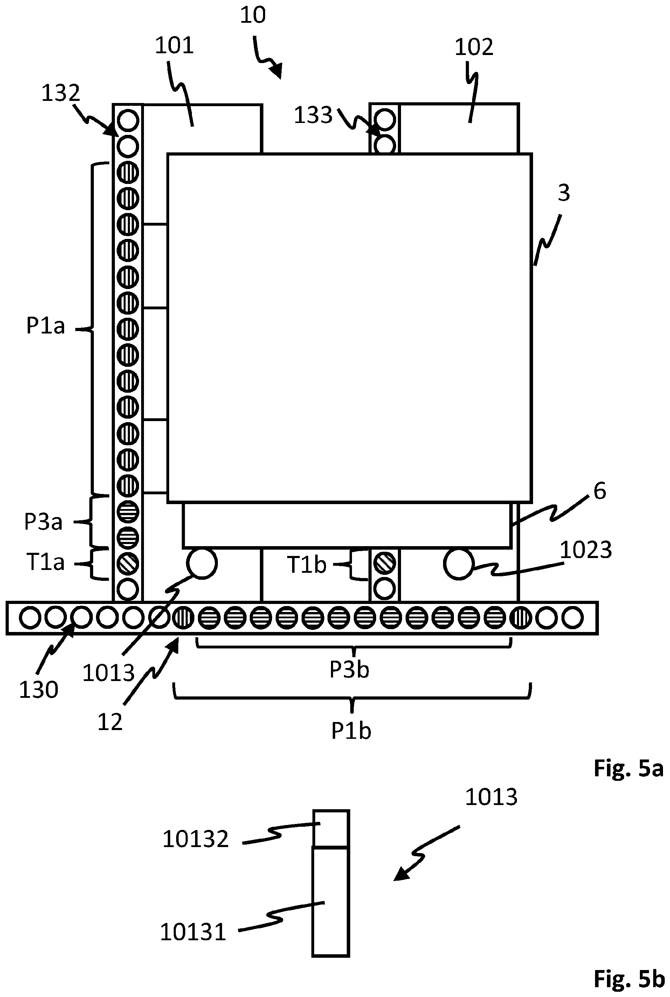

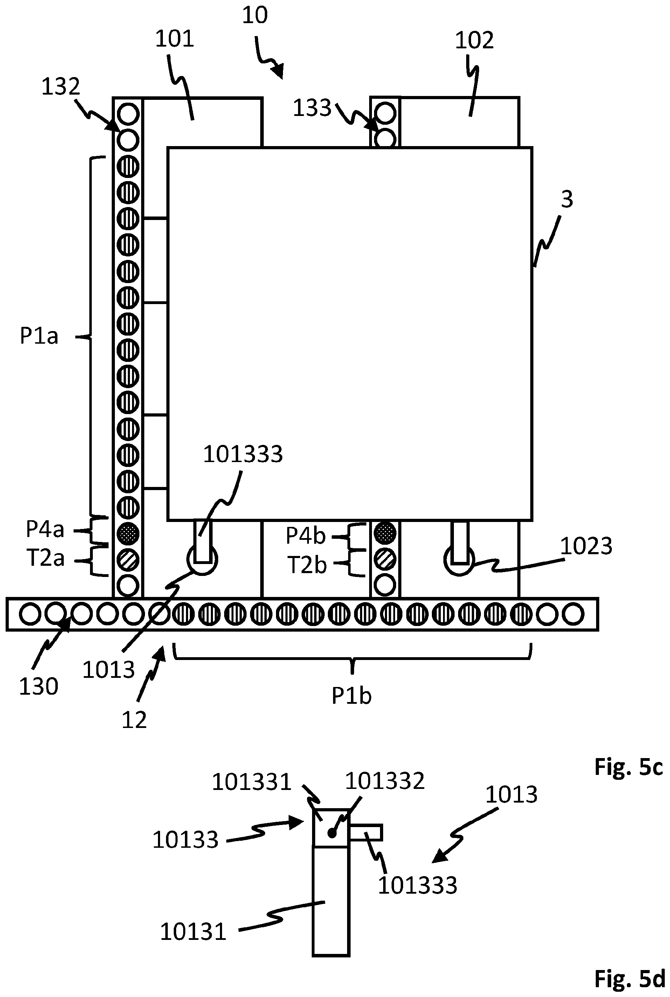

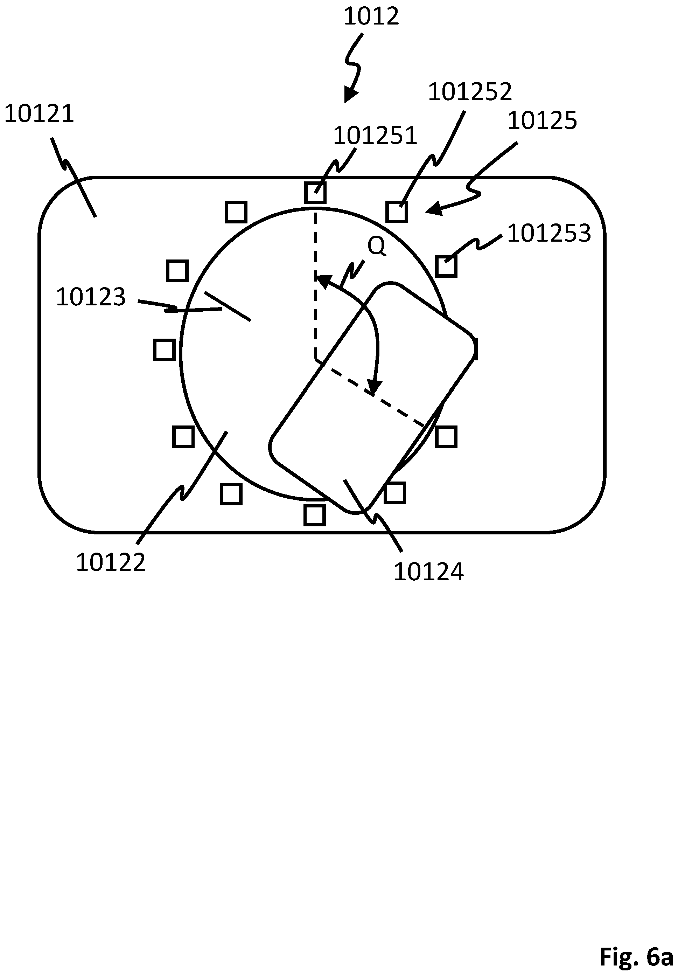

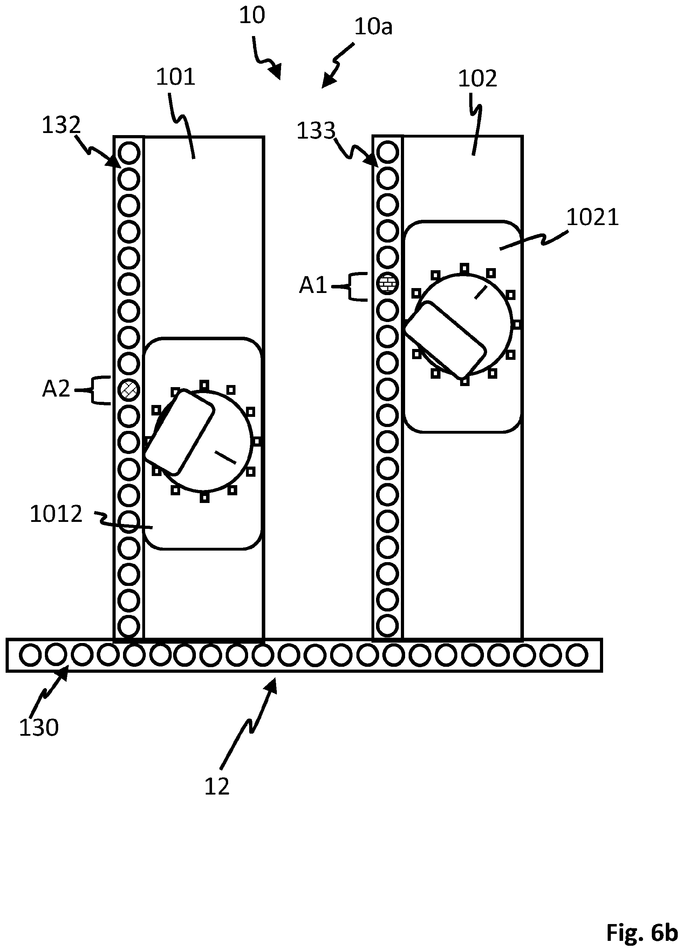

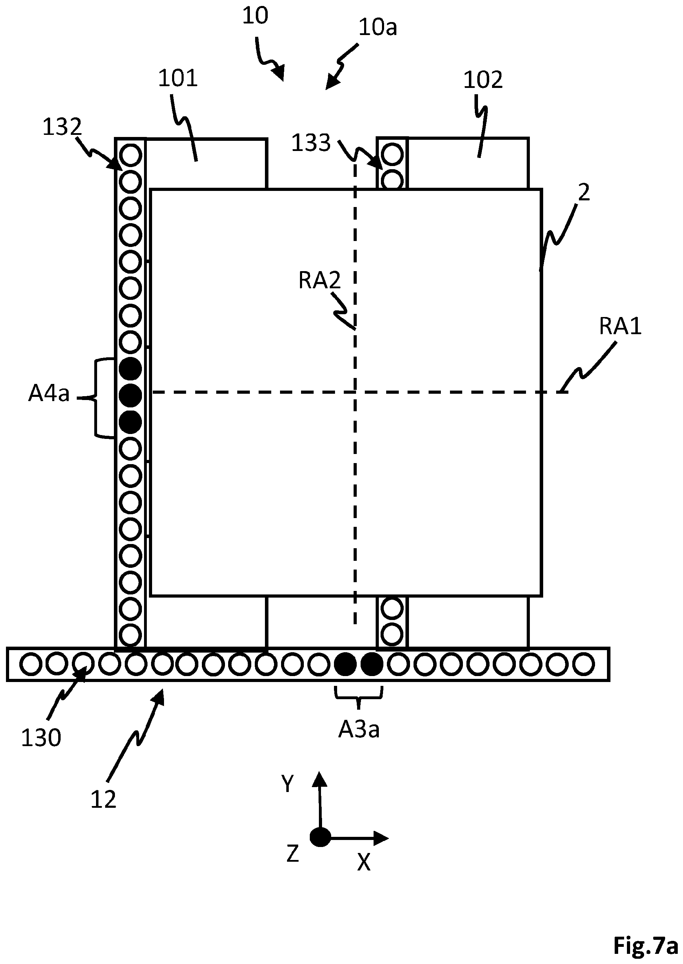

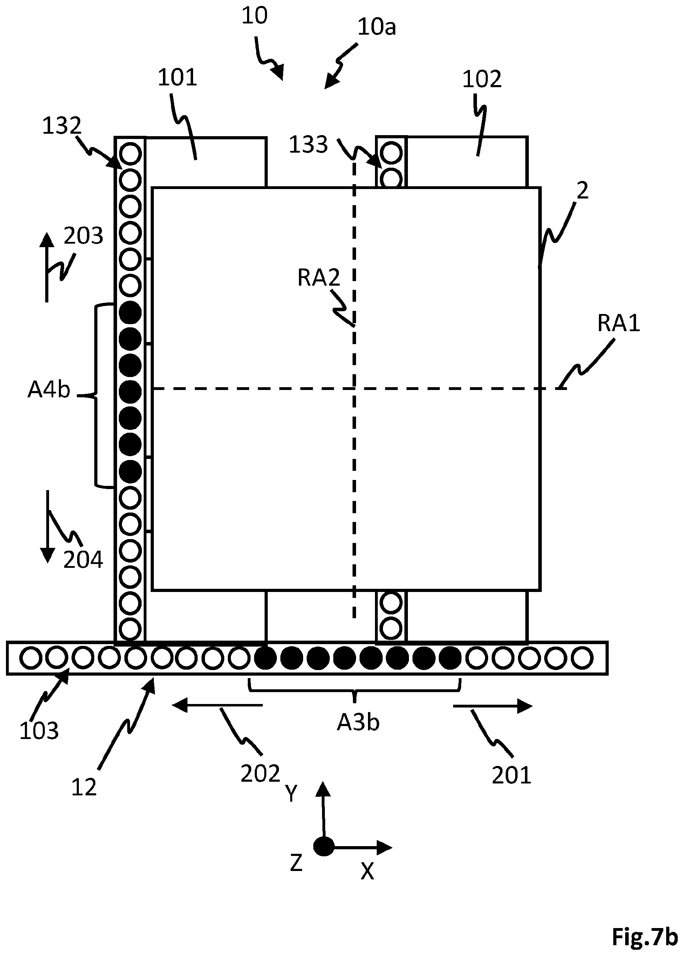

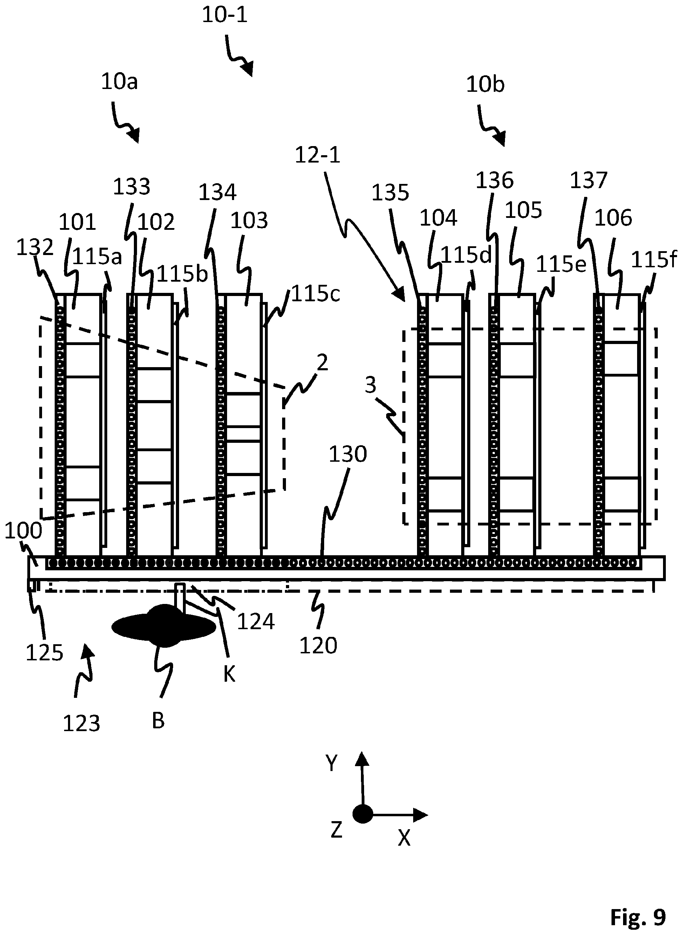

Die Steuerungseinrichtung 13 ist eingerichtet, mittels der optischen Anzeigeinrichtung 12 für eine oder mehrere der vordefinierten Handhabungsaktionen folgende Informationen für den Bediener der Maschine 1 anzuzeigen:
- eine erste Soll-Position P1a, P1b auf der Auflageeinrichtung 10 für ein Rohteil 2a eines Werkstücks 2 und eine zweite Ziel-Position P2a, P2b auf der Auflageeinrichtung 10 für ein Fertigteil 2b des Werkstücks 2 (siehe **Fig. 3**),
- eine Soll-Position P3a, P3b auf der Auflageeinrichtung 10 für ein Distanzwerkstück 6 zwischen der Position mindestens eines Anschlag 1013, 1023 der Auflageeinrichtung 10 und einer Soll-Position P1a, P1b eines Werkstück 3 (siehe **Fig. 4**),
- eine Soll-Art T1, T2 eines Aufsatzelementes 10132, 110133 eines Anschlags 1013 der Auflageeinrichtung 10 (siehe **Fig. 5a bis 5d**),
- eine Soll-Position P4a, P4b eines abragenden Distanzteils 101333 eines Anschlags 1013 der Auflageeinrichtung 10 (siehe **Fig. 5c**),
- eine Soll-Winkelposition Q des mindestens einen Haltemittels (siehe **Fig. 6a** **und** **6b**),
- eine Soll-Drehachse RA1, RA2 zum Wenden eines Werkstücks 2 (siehe **Fig. 7a** **und** **7b**),
- ein Erreichen bzw. ein Nicht-Erreichen einer vordefinierten Fixierkraft bei einem der Haltemittel 1011, 1012, 1021, 1022, 1031, 1032, 1041, 1042, 1051, 1052, 1061, 1062, wobei das Nicht-Erreichen der vordefinierten Fixierkraft eine Kontrolle des Haltemittels 1011, 1012, 1021, 1022, 1031, 1032, 1041, 1042, 1051, 1052, 1061, 1062 vom Bediener verlangt (siehe Fig. 5a),
- ein Erfüllen bzw. ein Nicht-Erfüllen einer vordefinierten Soll-Ladung einer Batterie bzw. eines Akkus bei einem der Haltemittel 1011, 1012, 1021, 1022, 1031, 1032, 1041, 1042, 1051, 1052, 1061, 1062, wobei das Nicht-Erfüllen der vordefinierten Soll-Ladung einen Austausch der Batterie bzw. des Akkus oder des betreffenden Haltemittels 1011, 1012, 1021, 1022, 1031, 1032, 1041, 1042, 1051, 1052, 1061, 1062 vom Bediener verlangt (siehe Fig. 2),
- ein Überschreiten bzw. ein Nicht-Überschreiten einer vordefinierten maximalen Schwingungsamplitude eines Werkstücks 2, 3 bei einem der Haltemittel 1011, 1012, 1021, 1022, 1031, 1032, 1041, 1042, 1051, 1052, 1061, 1062, wobei ein Überschreiten der vordefinierten maximalen Schwingungsamplitude eine Kontrolle des Haltemittels 1011, 1012, 1021, 1022, 1031, 1032, 1041, 1042, 1051, 1052, 1061, 1062 vom Bediener verlangt (siehe Fig. 4),
- eine Soll-Position 124, die der Bediener B mit einem Körperteil K einnehmen soll, so dass eine Vakuumansaugung für eines der Werkstücke 2, 3 an zuordneten Konsolen 101, 102, 103, 104, 105, 106 und zugeordneten Haltemitteln 1011, 1012, 1021, 1022, 1031, 1032, 1041, 1042, 1051, 1052, 1061 aktiviert bzw. deaktiviert wird (siehe Fig. 9),
- eine Soll-Position 124, die der Bediener B mit einem Körperteil K einnehmen soll, so dass ein Anschlag 1013, 1023 für eines der Werkstücke 2, 3 ausgefahren bzw. eingefahren wird (siehe Fig. 9),
- eine Soll-Position 124, die der Bediener B mit einem Körperteil K einnehmen soll, so dass mindestens eine Einlegehilfsvorrichtung 115a, 115b, 115c, 115e, 115f, 115g für eines der Werkstücke 2, 3 aktiviert bzw. deaktiviert wird (siehe Fig. 9).
- ein Erreichen bzw. ein Nicht-Erreichen eines vordefinierten Vakuumluftdrucks bei einer der Konsolen 101, 102, 103, 104, 105, 106, wobei das Nicht-Erreichen des vordefinierten Vakuumluftdrucks eine nachfolgende Kontrolle der betreffende Konsole 101, 102, 103, 104, 105, 106 vom Bediener verlangt (siehe Fig. 4),
- eine Restlaufzeit eines aktiven Bearbeitungsprogramms der Maschine 1 bevorzugt in Form eines Fortschrittbalkens, so dass der Bediener eine Zeitangabe für die Durchführung von Wartungsarbeiten oder vorbereitende Tätigkeiten für einen anderen Teilbereich 10a, 10b der Maschine 1 hat, bei dem aktuell kein aktives Bearbeitungsprogramm abläuft.

Die Steuerungseinrichtung 13 ist insbesondere eingerichtet, die optische Anzeigeeinrichtung 12 für unterschiedliche der genannten Positionen P1a, P1b, P2a, P2b, P3a, P3b, ... für unterschiedliche der genannten Arten T1, T2 des Aufsatzes 10132, 110133 und/oder für unterschiedliche Drehwinkel des Haltemittels 1012, 1021 und/oder weitere der oben genannten Soll-Parameter bzw. vordefinierten Parameter wie folgt anzusteuern:
- zum Abstrahlen einer ersten Gruppe von Leuchteffekten mit unterschiedlichen Helligkeiten, und/oder
- zum Abstrahlen einer zweiten Gruppe von Leuchteffekten mit unterschiedlichen Farben, und/oder
- zum Abstrahlen einer dritten Gruppe von Leuchteffekten mit unterschiedlichen Blinkmustern.

Die Steuerungseinrichtung 13 ist insbesondere eingerichtet, die optische Anzeigeeinrichtung 12 in Abhängigkeit von vordefinierten Prozessparametern des zu bearbeitenden Werkstücks 2, 3 zu steuern und/oder in Abhängigkeit eines aktuellen Prozessschritts anzusteuern. Die Steuerungseinrichtung 13 ist ferner insbesondere eingerichtet, eine flexible Zuordnung zwischen den ersten Leuchteffekten und/oder den zweiten Leuchteffekten und/oder den dritten Leuchteffekten und den vordefinierten Handhabungsaktionen zu ermöglichen.

Die Steuerungseinrichtung 13 umfasst einen Prozessor oder mehrere Prozessoren zur Durchführung eines Verfahrens, wie nachfolgend noch beschrieben wird. Die Steuerungseinrichtung 13 umfasst ferner mindestens eine Speichereinrichtung, in der Prozessparameter der Maschine 1 gespeichert sind und die vom Bediener der Maschine 1 geändert werden können, wie nachfolgend noch beschrieben wird.

Die Steuerungseinrichtung 13 umfasst ferner eine externe Schnittstelle 15, über die per Remotezugriff auf die Steuerungseinrichtung 13 zugegriffen werden kann und insbesondere die flexible Zuordnung zwischen den ersten Leuchteffekten und/oder den zweiten Leuchteffekten und/oder den dritten Leuchteffekten und den vordefinierten Handhabungsaktionen geändert werden kann. Der Remotezugriff kann beispielsweise von einem Bedienerterminal 5 über das Internet erfolgen, das durch eine Wolke mit dem Bezugszeichen 4 angedeutet ist.

Die Maschine 1 umfasst ferner bevorzugt eine Bedienerschnittstelle 14 beispielsweise in Form eines berührungssensitiven Monitors, falls die optische Anzeigeeinrichtung 12 nicht bereits einen berührungsempfindlichen Monitor umfasst. Die Bedienerschnittstelle 14 ist mit der Steuerungseinrichtung 13 über eine Datenleitung verbunden. Über die Bedienerschnittstelle 14 können Informationen über den Status der Maschine 1 ausgegeben werden sowie Eingaben für eine Konfiguration der Maschine 1 vorgenommen werden, wie nachfolgend noch beschrieben wird. Über die Bedienerschnittstelle 14 kann ein Bediener der Maschine 1 insbesondere die flexible Zuordnung zwischen den ersten Leuchteffekten und/oder den zweiten Leuchteffekten und/oder den dritten Leuchteffekten und den vordefinierten Handhabungsaktionen ändern.

Die Steuerungseinrichtung 13 ist insbesondere eingerichtet, die Benutzerschnittstelle 14 derart zu steuern, dass an der Benutzerschnittstelle 14 ein Menü für eine Anzeige und eine Änderung der flexiblen Zuordnung angezeigt wird, wobei das Menü in einer ersten Ebene eine Auswahl einer der vordefinierten Handhabungsaktionen ermöglicht, und wobei das Menü in einer zweiten Ebene eine Auswahl der Leuchteffekte für die ausgewählte vordefinierte Handhabungsaktion ermöglicht. Die Steuerungseinrichtung 13 ist ferner insbesondere eingerichtet, die Benutzerschnittstelle 14 derart zu steuern, dass in der zweiten Ebene oder einer dritten Ebene des Menüs ein Leuchteffekt für jedes für die ausgewählte vordefinierte Handhabungsaktion zu verwendende Leuchtmittel 1301, 1032, 1321, 1322, 1331, 1332 (siehe Fig. 2) der optischen Anzeigeeinrichtung 12 unabhängig von den weiteren zu verwendenden Leuchtmitteln 1301, 1032, 1321, 1322, 1331, 1332 für die ausgewählte vordefinierte Handhabungsaktion ausgewählt werden kann.

In einer alternativen Ausführungsform umfasst die Maschine zwei Auflageeinrichtungen, die in der Längsrichtung X nacheinander angeordnet sind. Die Bearbeitungseinrichtung 11 ist in diesem Fall derart konfiguriert und ausgestattet, dass die Bearbeitungseinrichtung 11 über die zwei Auflageeinrichtungen für die Bearbeitung von Werkstücken bewegt werden kann. Die zwei Auflageeinrichtungen können hierbei jeweils einzeln aus nur einen Auflagebereich bestehen oder wie oben beschrieben jeweils zwei Teilbereiche umfassen.

Die Fig. 2 zeigt in einer Ansicht in vertikaler Richtung von oben nach unten eine bevorzugte Ausführungsform der Auflageeinrichtung 10 und eine bevorzugte Ausführungsform der optischen Anzeigeeinrichtung 12, wobei von der Stützstruktur 100 nur ein Ausschnitt dargestellt ist.

Die Auflageeinrichtung 10 umfasst mehrere an der Stützstruktur 100 angeordnete und sich in der Querrichtung Y erstreckenden Konsolen 101, 102, 103, 104, 105, 106. In dem Ausführungsbeispiel von Fig. 2 umfasst die Auflageeinrichtung 10 beispielhaft sechs derartige Konsolen 101, 102, 103, 104, 105, 106. Die jeweilige Konsole 101, 102, 103, 104, 105, 106 ist bevorzugt in der Längsrichtung X bevorzugt manuell verschiebbar angeordnet, was durch Pfeile 1010, 1020, 1030, 1040, 1050, 1060 in Fig. 2 angedeutet ist. In einer alternativen Ausgestaltung wird die Verschiebbarkeit der Konsolen 101, 102, 103, 104, 105, 106 durch einen Antrieb insbesondere einen motorischen Antrieb bewirkt.

Auf den Konsolen 101, 102, 103, 104, 105, 106 sind beispielsweise jeweils zwei Haltemittel 1011, 1012, 1021, 1022, 1031, 1032, 1041, 1042, 1051, 1052, 1061, 1062 zum Abstützen und Fixieren der Werkstücke 2, 3 angeordnet. Die Haltemittel 1011, 1012, 1021, 1022, 1031, 1032, 1041, 1042, 1051, 1052, 1061, 1062 sind bevorzugt als Blocksauger ausgelegt, bei denen die Werkstücke 2, 3 durch ein Vakuum auf eine bevorzugte gummierte Oberseite der Haltemittel 1011, 1012, 1021, 1022, 1031, 1032, 1041, 1042, 1051, 1052, 1061, 1062 angezogen und fixiert werden können. Alternativ können die Haltemittel 1011, 1012, 1021, 1022, 1031, 1032, 1041, 1042, 1051, 1052, 1061, 1062 auch jeweils mit mindestens einer mechanischen Fixiereinheit zum Fixieren der Werkstücke 2, 3 ausgestattet sein, die beispielsweise jeweils einen Abschnitt eines Randbereichs der Werkstücke 2, 3 umgreifen können.

Eine erste Gruppe 101, 102, 103 der Konsolen 101, 102, 103, 104, 105, 106 ist bevorzugt dem ersten Teilbereich 10a der Auflageeinrichtung 10 zugeordnet und eine zweite Gruppe 104, 105, 106 der Konsolen 101, 102, 103, 104, 105, 106 ist bevorzugt dem zweiten Teilbereich 10a der Auflageeinrichtung 10 zugeordnet. Entsprechend ist eine erste Gruppe 1011, 1012, 1021, 1022, 1031, 1032 der Haltemittel 1011, 1012, 1021, 1022, 1031, 1032, 1041, 1042, 1051, 1052, 1061, 1062 bevorzugt dem ersten Teilbereich 10a und eine zweite Gruppe 1041, 1042, 1051, 1052, 1061, 1062 der Haltemittel 1011, 1012, 1021, 1022, 1031, 1032, 1041, 1042, 1051, 1052, 1061, 1062 bevorzugt dem zweiten Teilbereich 10b zugeordnet. Zwischen den beiden Teilbereichen 10a, 10b befindet sich bevorzugt ein Abstand von mindestens 50 cm und weiter bevorzugt von mindestens 100 cm, so dass ein Bediener der Maschine 1 aufgrund der begrenzten Armlänge des Bedieners einen ergonomischen Zugang zu allen Konsolen 101, 102, 103, 104, 105, 106 und allen Haltemitteln 1011, 1012, 1021, 1022, 1031, 1032, 1041, 1042, 1051, 1052, 1061, 1062 erhält.

Die optische Anzeigeeinrichtung 12 umfasst in dem dargestellten Ausführungsbeispiel ein erstes Lichtband 130, dass an der Stützstruktur 100 in der Längsrichtung X der Auflageeinrichtung 10 angeordnet ist. In dem Ausführungsbeispiel von Fig. 2 ist das erste Lichtband 130 in zwei Teillichtbänder 130a und 130b unterteilt. Alternativ kann auch ein nicht unterteiltes erstes Lichtband 130 eingesetzt werden.

Die optische Anzeigeeinrichtung 12 umfasst ferner mehrere zweite Lichtbänder 132, 133, 134, 135, 136, 137, welche jeweils an einer der Konsolen 101, 102, 103, 104, 105, 106 in der Querrichtung Y der Auflageeinrichtung 10 angeordnet sind. In dem Ausführungsbeispiel von Fig. 2 ist jeweils eins von sechs zweiten Lichtbändern 132, 133, 134, 135, 136, 137 an jeweils einer der Konsolen 101, 102, 103, 104, 105, 106 angeordnet.

Das erste Lichtband 130 umfasst bevorzugt eine lineare Anordnung von ersten Leuchtmitteln 1301, 1302 (siehe Fig. 3). Analog umfassen die zweiten Lichtbänder 132, 133, 134, 135, 136, 137 bevorzugt eine lineare Anordnung von zweiten Leuchtmitteln 1321, 1322, 1331, 1332) (siehe Fig. 3). Die Leuchtmittel 1301, 1032, 1321, 1322, 1331, 1332 sind bevorzugt als monochromatische Leuchtdioden und weiter bevorzugt als sogenannte RGB-Leuchtdioden ausgelegt. Alternativ können die Leuchtmittel 1301, 1032, 1321, 1322, 1331, 1332 aus einer Gruppe von jeweils drei monochrom strahlenden Leuchtdioden anstelle jeweils einer RGB-Leuchtdiode bestehen, die drei verschiedenen sichtbare Spektralbereiche abdecken.

Die Bezeichnung der Längsrichtung als X und der Querrichtung als Y kann in einer alternativen Ausgestaltungsform der Maschine 1 auch vertauscht sein.

In einer weiteren Ausführungsform werden die Leuchtmittel der zweiten Lichtbänder 132, 133, 134, 135, 136, 137 dazu verwendet, neben der Soll-Position des jeweiligen Haltemittels 1011, 1012, 1021, 1022, 1031, 1032, 1041, 1042, 1051, 1052, 1061, 1062 dem Bediener anzuzeigen, ob eine vordefinierte Soll-Ladung einer Batterie bzw. eines Akkus bei einem der Haltemittel 1011, 1012, 1021, 1022, 1031, 1032, 1041, 1042, 1051, 1052, 1061, 1062 erfüllt wird oder nicht erfüllt wird. Beim Nicht-Erfüllen der vordefinierten Soll-Ladung wird durch die Anzeige ein Austausch der Batterie bzw. des Akkus des betreffenden Haltemittels 1011, 1012, 1021, 1022, 1031, 1032, 1041, 1042, 1051, 1052, 1061, 1062 oder des kompletten Haltemittels 1011, 1012, 1021, 1022, 1031, 1032, 1041, 1042, 1051, 1052, 1061, 1062 vom Bediener verlangt.

Die Steuerungseinrichtung 13 fragt hierzu periodisch zum Beispiel im zeitlichen Abstand von 30 Minuten oder 1 Stunde den Ladezustand der Batterien bzw. Akkus der Haltemittel 1011, 1012, 1021, 1022, 1031, 1032, 1041, 1042, 1051, 1052, 1061, 1062 ab und vergleicht den Ladezustand mit einem vordefinierten Sollwert. Sollte dieser vordefinierte Sollwert nicht erreicht werden, wird die optische Anzeigeeinrichtung 12 entsprechend von der Steuerungseinrichtung 13 für die Anzeige der Handhabungsaktion an den Bediener angesteuert.

Hierzu leuchtet beispielsweise ein Leuchtmittel eines der Lichtbänder 132, 133, 135, 135, 136, 137 des betreffenden Teilbereichs 10a, 10b auf, welches nicht zum Anzeigen der Soll-Position des jeweiligen Haltemittels 1011, 1012, 1021, 1022, 1031, 1032, 1041, 1042, 1051, 1052, 1061, 1062 verwendet wird. Bevorzugt leuchtet hierzu ein Leuchtmittel direkt daneben bzw. in der Nähe der Soll-Position des jeweiligen Haltemittels 1011, 1012, 1021, 1022, 1031, 1032, 1041, 1042, 1051, 1052, 1061, 1062 auf, so dass für den Bediener eindeutig ist, bei welchem Haltemittel die vordefinierte Soll-Ladung nicht erreicht wird.

Alternativ leuchtet mindestens eines der Leuchtmittel, welches zeitgleich die Soll-Position des Haltemitteils anzeigt, im zeitlichen Wechsel von beispielsweise 10 Sekunden auf, um zum einen die Soll-Position des Haltemittels und zum anderen das Nicht-Erreichen der vordefinierten Soll-Ladung der Batterie bzw. des Akkus des Haltemittels anzuzeigen.

In einer weiteren Ausführungsform werden die Leuchtmittel zumindest eines der Lichtbänder 130, 132, 133, 134, 135, 136, 137 dazu verwendet, eine Restlaufzeit eines aktiven Bearbeitungsprogramms der Maschine 1 bevorzugt in Form eines Fortschrittbalkens, so dass der Bediener dadurch eine Zeitangabe für die Durchführung von Wartungsarbeiten oder vorbereitende Tätigkeiten für einen anderen Teilbereich 10a, 10b der Maschine 1, bei dem aktuell kein aktives Bearbeitungsprogramm abläuft, erhält, bevor der Bediener das jeweilige fertig bearbeitete Werkstück nach Beendigung des Bearbeitungsprogramms entnehmen sollte. Hierzu können beispielsweise je nach Länge der maximalen Dauer des längsten Bearbeitungsprogramms beispielsweise 5 oder 10 oder 20 oder 30 benachbarte LEDs eines der Lichtbänder 130, 132, 133, 134, 135, 136, 137 genutzt werden, wobei beispielsweise die erste in Blickrichtung des Bedieners liegende LED (z.B. parallel zur y-Achse oder zur X-Achse wie in Fig. 2 eingezeichnet) für die Restdauer von 1 Minute, die direkt von dieser LED rechtsliegende LED für die Restdauer von 2 Minuten, die direkt von dieser LED rechtsliegende LED für die Restdauer von 3 Minuten usw. weiter verwendet wird, so dass eine Art abnehmender bzw. kürzer werdender Fortschrittsbalken vorliegt. Dieser Fortschrittsbalken wird von der Steuerungseinrichtung 13 variabel bevorzugt dort beispielsweise mit der Farbe hellgrün zum Leuchten gebracht, wo eine ausreichende Anzahl benachbarter Leuchtmittel eines der Lichtbänder 130, 132, 133, 134, 135, 136, 137 jeweils aktuell nicht für die Anzeige einer anderen Handhabungsaktion für den Bediener genutzt werden.

Die **Fig. 3** zeigt in einer Ansicht in vertikaler Richtung von oben nach unten einen Ausschnitt der Auflageeinrichtung 10 und zwar den ersten Teilbereich 10a. Ein Werkstück 2 liegt auf nicht dargestellten verdeckten Haltemitteln der Konsolen 101, 102 auf. Die Anzeigeeinrichtung 12 wird mittels der Steuerungseinrichtung 13 derart angesteuert, dass die Anzeigeeinrichtung 12 dem Bediener nicht nur eine Soll-Position anzeigt, wo der Bediener das Rohteil 2a des Werkstück 2 auf der Auflageeinrichtung 10 auflegen soll, sondern auch eine Ziel-Position anzeigt, wo sich das Fertigteil 2b des Werkstücks 2 nach der Bearbeitung befindet. Es wird damit implizit auch die Endform des Fertigteils 2b angezeigt. Sollte die Endform des Fertigteils 2b von einer Rechteck- oder Quadratform abweichen, kann dies alternativ oder zusätzlich mittels einer Laserprojektion oder auf einem Monitor angezeigt werden.

Dort, wo das Rohteil 2a aufzulegen ist, leuchten die Leuchtmittel des ersten Lichtband 130 und/oder zumindest eines zweiten Lichtbandes 132 mit einem ersten Leuchteffekt aus mindestens einer der oben genannten Gruppen von Leuchteffekten, wobei insbesondere nur jene Leuchtmittel mit dem ersten Leuchteffekt leuchten, die sich gegenüber dem Randbereich des Rohteils 2a befinden, wenn das Werkstück 2 korrekt aufgelegt wurde. In Fig. 3 ist dies durch ein Muster mit senkrechten Strichen bei den betreffenden Leuchtmitteln angedeutet. Ferner ist die Soll-Position des Rohteils 2a durch Klammern mit Bezugszeichen P1a, P1b in Fig. 3 gekennzeichnet.

Dort, wo das Fertigteil 2b nach der Bearbeitung sich befinden wird, leuchten weitere Leuchtmittel des ersten Lichtband 130 und/oder des zumindest eines zweiten Lichtbandes 132 mit einem zweiten Leuchteffekt aus mindestens einer der oben genannten Gruppen von Leuchteffekten, wobei insbesondere nur jene weitere Leuchtmittel mit dem zweiten Leuchteffekt leuchten, die sich gegenüber dem Fertigteil 2b nach der Bearbeitung befinden werden. In Fig. 3 ist dies durch ein Karomuster bei den betreffenden Leuchtmitteln angedeutet. Ferner ist die Ziel-Position des Fertigteils 2b durch Klammern mit Bezugszeichen P2a, P2b in Fig. 3 gekennzeichnet.

Die übrigen Leuchtmittel 1321, 1322 des ersten Lichtbandes 130 und des zumindest eines zweiten Lichtbandes 132 sind bevorzugt ausgeschaltet, um Energie zu sparen.

Die **Fig. 4** zeigt ebenfalls in einer Ansicht in vertikaler Richtung von oben nach unten einen Ausschnitt der Auflageeinrichtung 10 und zwar den ersten Teilbereich 10a. Ein Werkstück 3 liegt auf nicht dargestellten verdeckten Haltemitteln der Konsolen 101, 102 auf. Die Anzeigeeinrichtung 12 wird mittels der Steuerungseinrichtung 13 derart angesteuert, dass die Anzeigeeinrichtung 12 dem Bediener nicht nur eine ersten Soll-Position anzeigt, wo der Bediener das Werkstück 3 auf der Auflageeinrichtung 10 auflegen soll, sondern auch eine zweite Soll-Position anzeigt, wo der Bediener ein Distanzwerkstück 6 an Anschläge 1013, 1023 der Auflageeinrichtung 10 halten soll und anschließend das Werkstück 3 auf Kontakt an das Distanzwerkstück 6 schieben soll, damit das Werkstück 3 wie vordefiniert positioniert wird.

Ein derartiger Versatz des Werkstücks 3 gegenüber den Anschlägen 1013, 1023 kann beispielsweise dann notwendig werden, wenn aufgrund fehlenden Platzbedarfs und/oder mangelnden Beweglichkeit in der Bearbeitungseinrichtung 11 mit den vorgesehenen Bearbeitungswerkzeugen 111, 112, 113 der Bearbeitungseinrichtung 11 ansonsten nicht alle vorgesehen Bereiche des Werkstücks 3 bearbeitet werden könnten.

Die Anschläge 1013, 1023 sind bevorzugt versenkbar in den Konsolen 101, 102 angeordnet, wobei weiter bevorzugt ein pneumatischer oder motorisierter Antrieb für eine Bewegung der Anschläge 1013, 1023 in der Höhenrichtung Z vorhanden ist.

Dort, wo das Werkstück 3 aufzulegen und zu positionieren ist, leuchten die Leuchtmittel des ersten Lichtband 130 und zumindest eines zweiten Lichtbandes 132 mit einem ersten Leuchteffekt aus mindestens einer der oben genannten Gruppen von Leuchteffekten, wobei insbesondere nur jene Leuchtmittel mit dem ersten Leuchteffekt leuchten, die sich benachbart zu dem Werkstück 3 befinden, wenn das Werkstück 3 korrekt aufgelegt wurde. In der in Fig. 4 dargestellten Konstellation leuchten insbesondere nur jene Leuchtmittel des ersten Lichtbands 130 mit dem ersten Leuchteffekt, die sich gegenüber dem Randbereich des Werkstücks 3 befinden. In Fig. 3 ist dies durch ein Muster mit senkrechten Strichen bei den betreffenden Leuchtmitteln angedeutet. Ferner ist die Soll-Position des Werkstücks 3 durch Klammern mit den Bezugszeichen P1a, P1b in Fig. 4 gekennzeichnet.

Dort, wo das Distanzwerkstück 6 vom Bediener hingehalten oder vorübergehend für die Positionierung des Werkstücks 3 abgelegt werden soll, leuchten weitere Leuchtmittel des ersten Lichtband 130 und/oder zumindest eines zweiten Lichtbandes 132 mit einem zweiten Leuchteffekt aus mindestens einer der oben genannten Gruppen von Leuchteffekten, wobei insbesondere nur jene weitere Leuchtmittel mit dem zweiten Leuchteffekt leuchten, die sich benachbart zu dem Distanzwerkstück 6 befinden, wenn das Distanzwerkstück 6 vom Bediener korrekt hingehalten wird bzw. vorübergehend für die Positionierung des Werkstücks 3 korrekt abgelegt wurde. In Fig. 3 ist dies durch ein ein Muster mit waagerechten Strichen bei den betreffenden Leuchtmitteln angedeutet. Ferner ist die Soll-Position des Distanzwerkstück 6 durch Klammern mit den Bezugszeichen P3a, P3b in Fig. 4 gekennzeichnet.

Das Distanzwerkstück 6 kann ebenfalls aus Holz oder einem Holzwerkstoff bestehen. Alternativ besteht das Distanzwerkstück 6 beispielsweise aus Kunststoff oder Metall.

In einer weiteren Ausführungsform werden die Leuchtmittel der optischen Anzeigeeinrichtung 12 auch dazu verwendet, dem Bediener anzuzeigen, ob eine vordefinierte Fixierkraft bei einem der betreffenden Haltemittel, die sich bevorzugt unter dem Werkstück 3 befinden und das Werkstück 3 fixieren sollen, erreicht wird oder nicht erreicht wird. Das Nicht-Erreichen der vordefinierten Fixierkraft verlangt vom Bediener eine Kontrolle des betreffenden Haltemittels. Die vordefinierte Fixierkraft ist beispielsweise ein vordefinierter Druck eines Vakuums der Haltemittel. Die vordefinierte Fixierkraft kann auch ein vordefinierter mechanischer Anpressdruck sein, wobei derartige Haltemittel bevorzugt im Randbereich des Werkstücks 3 angeordnet sind, und dort das Werkstück 3 jeweils auf eine Auflagefläche des Haltemittels drücken.

Die Steuerungseinrichtung 13 fragt hierzu periodisch zum Beispiel im zeitlichen Abstand von 1 Sekunde oder 10 Sekunden einen Zustandswert eines Drucksensors der Haltemittel 1011, 1012, 1021, 1022, 1031, 1032, 1041, 1042, 1051, 1052, 1061, 1062 ab und vergleicht den Zustandswert mit einem vordefinierten Sollwert. Sollte dieser vordefinierte Sollwert nicht erreicht werden, wird die optische Anzeigeeinrichtung 12 entsprechend von der Steuerungseinrichtung 13 für die Anzeige der Handhabungsaktion an den Bediener angesteuert. Somit umfassen die Haltemittel 1011, 1012, 1021, 1022, 1031, 1032, 1041, 1042, 1051, 1052, 1061, 1062 bei diesem Ausführungsbeispiel jeweils einen Drucksensor.

Hierzu leuchtet beispielsweise ein Leuchtmittel eines der Lichtbänder 130, 132, 133 des Teilbereichs 10a auf, welches nicht zum Anzeigen der Soll-Position des Werkstücks 3 verwendet wird. In einem solchen Fall bekäme der Bediener nur die Handhabungsinformation, alle Haltemittel zu überprüfen, weil mindestens eines der Haltemittel nicht die vordefinierte Fixierkraft erreicht.

Alternativ und bevorzugt leuchten jene der Leuchtmittel, die die Soll-Position des Werkstücks 3 anzeigen bzw. angezeigt haben, die sich unmittelbar neben dem Haltemittel befinden, und bevorzugt sowohl in der X-Richtung als auch in der Y-Richtung neben dem Haltemittel befinden, welches die vordefinierte Fixierkraft nicht erreicht, entsprechend auf. In einem solchen Fall bekäme der Bediener zudem die Handhabungsinformation, welches der Haltemittel nicht die vordefinierte Fixierkraft erreicht. Falls die Leuchtmittel die Soll-Position des Werkstücks gleichzeitig anzeigen, leuchten die betreffenden Leuchtmittel bevorzugt im zeitlichen Wechsel von beispielsweise 10 Sekunden auf, um zum einen die Soll-Position des Werkstücks und zum anderen die Position des Haltemittels, welches die vordefinierte Fixierkraft nicht erreicht, anzuzeigen.

In einer weiteren Ausführungsform werden die Leuchtmittel der optischen Anzeigeeinrichtung 12 dazu verwende, dem Bediener anzuzeigen, ob ein vordefinierter Druck eines Vakuums bei einer der Konsolen 101, 102 erreicht wird. Das Nicht-Erreichen des vordefinierten Drucks verlangt eine nachfolgende Kontrolle der betreffende Konsole 101, 102 vom Bediener als Handhabungsaktion.

Die Steuerungseinrichtung 13 fragt hierzu periodisch zum Beispiel im zeitlichen Abstand von 1 Sekunde oder 10 Sekunden einen Zustandswert eines Drucksensors der Konsole 101, 102 ab und vergleicht den Zustandswert mit einem vordefinierten Sollwert. Sollte dieser vordefinierte Sollwert nicht erreicht werden, wird die optische Anzeigeeinrichtung 12 entsprechend von der Steuerungseinrichtung 13 für die Anzeige der Handhabungsaktion an den Bediener angesteuert. Somit umfassen die Konsolen 101, 102 bei diesem Ausführungsbeispiel bevorzugt jeweils einen Drucksensor im Bereich einer Vakuumkammer oder einer Vakuumleitung der Konsolen 101, 102.

Hierzu leuchtet bevorzugt ein Leuchtmittel eines der Lichtbänder 132, 133 der betreffende Konsole 101, 102 des Teilbereichs 10a auf, welches nicht zum Anzeigen der Soll-Position des Werkstücks 3 verwendet wird. In einem solchen Fall bekäme der Bediener die Handhabungsinformation, dass die betreffende Konsole 101, 192 den vordefinierten Druck des Vakuums nicht erreicht.

Falls alle Leuchtmittel der Konsolen 101, 202 die Soll-Position des Werkstücks noch anzeigen, leuchtet bevorzugt eines der Leuchtmittel der betreffenden Konsole 101, 102 bevorzugt im zeitlichen Wechsel von beispielsweise 10 Sekunden auf, um zum einen die Soll-Position des Werkstücks und zum anderen das Nicht-Erreichen des vordefinierten Drucks des Vakuums der betreffenden Konsole 101, 102 anzuzeigen.

In einer weiteren Ausführungsform werden die Leuchtmittel der optischen Anzeigeeinrichtung 12 alternativ oder auch dazu verwendet, dem Bediener anzuzeigen, ob eine vordefinierte maximale Schwingungsamplitude eines Werkstücks 3 bei einem der betreffenden Haltemittel, die sich bevorzugt unter dem Werkstück 3 befinden und das Werkstück 3 fixieren, überschritten wird oder nicht überschritten wird. Das Überschreiten der vordefinierten maximalen Schwingungsamplitude verlangt eine Kontrolle des betreffenden Haltemittels vom Bediener, denn dies wäre ein Anzeichen, dass die für eine möglichst präzise Bearbeitung des Werkstücks 3 erforderliche Fixierkraft bei dem betreffenden Haltemittel zur Fixierung des Werkstücks 3 nicht ausreicht.

Die Steuerungseinrichtung 13 fragt hierzu periodisch zum Beispiel im zeitlichen Abstand von 1 Sekunde oder 10 Sekunden einen Zustandswert eines Schwingungssensors der Haltemittel 1011, 1012, 1021, 1022, 1031, 1032, 1041, 1042, 1051, 1052, 1061, 1062 ab und vergleicht den Zustandswert mit einem vordefinierten Maximalwert. Sollte dieser vordefinierte Maximalwert überschritten werden, wird die optische Anzeigeeinrichtung 12 entsprechend von der Steuerungseinrichtung 13 für die Anzeige der Handhabungsaktion an den Bediener angesteuert. Somit umfassen die Haltemittel 1011, 1012, 1021, 1022, 1031, 1032, 1041, 1042, 1051, 1052, 1061, 1062 bevorzugt jeweils einen bevorzugt im Bereich einer Werkstückauflagefläche des jeweiligen Haltemittels 1011, 1012, 1021, 1022, 1031, 1032, 1041, 1042, 1051, 1052, 1061, 1062 angeordneten Schwingungssensor zum Erfassen von Schwingungen des Werkstücks 3 am Ort des jeweiligen Haltemittels 1011, 1012, 1021, 1022, 1031, 1032, 1041, 1042, 1051, 1052, 1061, 1062.

Hierzu leuchtet beispielsweise ein Leuchtmittel eines der Lichtbänder 130, 132, 133 des Teilbereichs 10a auf, welches nicht zum Anzeigen der Soll-Position des Werkstücks 3 verwendet wird. In einem solchen Fall bekäme der Bediener nur die Handhabungsinformation, alle Haltemittel zu überprüfen, weil bei mindestens einem der Haltemittel die vordefinierte maximale Schwingungsamplitude für das Werkstück überschritten wird.

Alternativ leuchten jene der Leuchtmittel, die die Soll-Position des Werkstücks 3 anzeigen bzw. angezeigt haben, die sich unmittelbar neben dem Haltemittel befinden, und bevorzugt sowohl in der X-Richtung als auch in der Y-Richtung neben dem Haltemittel befinden, bei welchem die vordefinierte maximale Schwingungsamplitude überschritten wird, entsprechend auf. In einem solchen Fall bekäme der Bediener zudem die Handhabungsinformation, bei welchem Haltemittel die vordefinierte maximale Schwingungsamplitude für das Werkstück überschritten wird. Falls die Leuchtmittel die Soll-Position des Werkstücks noch anzeigen, leuchten die betreffenden Leuchtmittel bevorzugt im zeitlichen Wechsel von beispielsweise 10 Sekunden auf, um zum einen die Soll-Position des Werkstücks und zum anderen die Position des Haltemittels, bei welchem die vordefinierte maximale Schwingungsamplitude für das Werkstück überschritten wird, anzuzeigen.

Die übrigen Leuchtmittel 1321, 1322 des ersten Lichtbandes 130 und des zumindest eines zweiten Lichtbandes 132 sind bevorzugt ausgeschaltet, um Energie zu sparen.

Die Fig. 5a zeigt ebenfalls in einer Ansicht in vertikaler Richtung von oben nach unten einen Ausschnitt der Auflageeinrichtung 10 und zwar den ersten Teilbereich 10a. Fig. 5a enthält alle Merkmale von Fig. 4, so dass bezüglich dieser Merkmale auf die obige Beschreibung verwiesen wird.

Die Steuerungseinrichtung 13 steuert die Anzeigeeinrichtung 12 ferner derart an, dass ein Soll-Typ eines Aufsatzelements 10132, 110133 (siehe Fig. 5b) der Anschläge 1013, 1023 dem Bediener optisch signalisiert wird. Dort, wo die Anschläge 1013, 1023 auf der Auflageeinrichtung 10 angeordnet sind, leuchten die Leuchtmittel zumindest der zweiten Lichtbänder 132, 133 mit einem weiteren Leuchteffekt aus mindestens einer der oben genannten Gruppen von Leuchteffekten, wobei insbesondere nur jene Leuchtmittel mit dem weiteren Leuchteffekt leuchten, die sich benachbart zu dem jeweiligen Anschlag 1013, 1023 befinden. In Fig. 5a ist dies durch ein Muster mit schrägen Strichen, die von links oben nach rechts unten verlaufen, bei den betreffenden Leuchtmitteln angedeutet. Ferner ist die Position der Anschläge 1013, 1023 und der Soll-Typ des Aufsatzelements des Anschlags durch Klammern mit den Bezugszeichen T1a, T1b in Fig. 5a gekennzeichnet.

Die Fig. **5b** zeigt in einer Seitenansicht beispielhaft den Anschlag 1013 mit einem ersten Typ des Aufsatzelements. Der Anschlag 1013 umfasst bevorzugt einen Grundkörper 10131 und den ersten Typ von Aufsatzelement 10132, wobei der Grundkörper 10131 und das Aufsatzelement 10132 derart gestaltet sind, dass das Aufsatzelement 10132 vom Grundkörper 10131 entfernt werden kann, beispielsweise mittels einer Schraubverbindung. Sowohl der Grundkörper 10131 als auch das Aufsatzelement 10132 sind bevorzugt zylindrisch ausgestaltet. Alternativ können der Grundkörper 10131 und das Aufsatzelement 10132 beispielsweise quaderförmig ausgestaltet sein.

Die **Fig. 5c** zeigt ebenfalls in einer Ansicht in vertikaler Richtung von oben nach unten einen Ausschnitt der Auflageeinrichtung 10 und zwar den ersten Teilbereich 10a. Fig. 5c enthält alle Merkmale von Fig. 4, so dass bezüglich dieser Merkmale auf die obige Beschreibung verwiesen wird.

Die Steuerungseinrichtung 13 steuert die Anzeigeeinrichtung 12 ferner derart an, dass ein zweiter Soll-Typ des Aufsatzelements 10132, 110133 (siehe Fig. 5d) der Anschläge 1013, 1023 dem Bediener optisch signalisiert wird. Dort, wo die Anschläge 1013, 1023 auf der Auflageeinrichtung 10 angeordnet sind, leuchten die Leuchtmittel zumindest der zweiten Lichtbänder 132, 133 mit einem noch weiteren Leuchteffekt aus mindestens einer der oben genannten Gruppen von Leuchteffekten, wobei insbesondere nur jene Leuchtmittel mit dem noch weiteren Leuchteffekt leuchten, die sich benachbart zu dem jeweiligen Anschlag 1013, 1023 befinden. In Fig. 5c ist dies durch ein Muster mit schrägen Strichen, die von rechts oben nach links unten verlaufen, bei den betreffenden Leuchtmitteln angedeutet. Ferner ist die Position der Anschläge 1013, 1023 und der Soll-Typ des Aufsatzelements 10133 durch Klammern mit den Bezugszeichen T2a, T2b in Fig. 5c gekennzeichnet.

Die Steuerungseinrichtung 13 steuert die Anzeigeeinrichtung 12 ferner derart an, dass eine Position P4a, P4b eines abragenden Distanzteils 101333 (siehe Fig. 5d) der Anschläge 1013, 1023 dem Bediener optisch signalisiert wird. Dort, wo die Distanzteile 101333 auf der Auflageeinrichtung 10 vom Bediener positioniert bzw. ausgerichtet werden sollen, leuchten die Leuchtmittel zumindest der zweiten Lichtbänder 132, 133 mit einem noch weiteren Leuchteffekt aus mindestens einer der oben genannten Gruppen von Leuchteffekten, wobei insbesondere nur jene Leuchtmittel mit dem noch weiteren Leuchteffekt leuchten, die sich benachbart zu dem jeweiligen Distanzteil 10133 nach korrekter Positionierung bzw. Ausrichtung befinden. In Fig. 5c ist dies durch ein Punktmuster bei den betreffenden Leuchtmitteln angedeutet. Ferner ist die Soll-Position der Distanzteile 10133 durch Klammern mit den Bezugszeichen P4a, P4b in Fig. 5c gekennzeichnet.

Die Fig. **5d** zeigt in einer Seitenansicht beispielhaft den Anschlag 1013 mit dem zweiten Soll-Typ des Aufsatzelements 10133. Der Anschlag 1013 umfasst bevorzugt einen Grundkörper 10131 und die zweite Art des Aufsatzelements 10133, wobei das Aufsatzelement 10133 analog zur obigen Beschreibung demontierbar beispielsweise mittels einer Schraubverbindung gestaltet ist. Sowohl der Grundkörper 10131 als auch das Aufsatzelement 10133 sind bevorzugt im Wesentlichen zylindrisch ausgestaltet. Alternativ können der Grundkörper 10131 und das Aufsatzelement 10133 beispielsweise quaderförmig ausgestaltet sein. Das Aufsatzelements 10133 umfasst beispielsweise einen Haltekörper 101331, eine Drehachse 101332, die in dem Haltekörper bevorzugt horizontal angeordnet ist und das Distanzteil 101333, das durch die Drehachse 101332 schwenkbar bzw. abklappbar insbesondere zwischen einer vertikalen Position und einer horizontalen Position an dem Haltekörper 101331 angeordnet ist.

Die **Fig. 6a** zeigt ein Haltemittel 1012 mit einer besonderen Ausgestaltung. Das Haltemittel 1012 umfasst einen Basiskörper 10121, einen drehbar in dem Basiskörper 10121 gelagerten Grundkörper 10122 wie beispielsweise eine flache Scheibe, eine auf dem Grundkörper 10122 an dessen Randbereich angeordnete Markierung 10123, einen Haltekörper 10124, die auf dem Grundkörper 10122 montiert ist, und ein Codierungssystem 10125, wobei einzelne Codierungen 101251, 101252, 101253 des Codierungssystem 10125 um den Grundkörper 10122 verteilt auf dem Basiskörper 10121 bevorzugt mit einem Winkelabstand von 15° angeordnet sind. Alternativ kann der Winkelabstand beispielsweise auch 5° oder 10° betragen, wenn mehr Einstellmöglichkeiten bei dem Haltemittel 1012 gewünscht sind. Die Codierungen 101251, 101252, 101253 sind bevorzugt auf dem Basiskörper 10121 aufgedruckt oder aufgeklebt. Der Haltekörper 10124 umfasst bevorzugt einen weiteren Basiskörper und einen darauf montierbaren und austauschbaren Kontaktkörper zum Tragen und Befestigen eines Werkstücks. Der Kontaktkörper ist bevorzugt eine Saugplatte. In einer alternativen Ausführungsform umfasst der Kontaktkörper eine mechanische Fixiereinrichtung zum Tragen und Befestigen eines Werkstücks.

Je nachdem welche Soll-Winkelposition mittels einer der Codierungen 101251, 101252, 101253 von der Anzeigeeinrichtung 10 der Maschine 1 angezeigt wird, dreht der Bediener der Maschine die Drehvorrichtung 10122 so lange, bis die Markierung 10123 der betreffenden auf dem Basiskörper 10121 angeordneten Codierung 101251, 101252, 101253 gegenüberliegt. Jede einzelne der Codierungen 101251, 101252, 101253 basiert auf mindestens einem der oben genannten ersten, zweiten und/oder dritten Leuchteffekten.

In einer alternativen bevorzugten Ausgestaltung umfasst der Haltekörper 1012 eine Energiespeichereinrichtung beispielsweise in Form einer Batterie oder eines aufladbaren Akkus, einen elektronischen Schaltkreis und eine externe Schnittstelle (beides nicht dargestellt in Fig. 6a). Der Basiskörper 10121 umfasst hierbei an den Stellen der Codierungen 101251, 101252, 101253 jeweils eine mittels der externen Schnittstelle und des elektronischen Schaltkreises konfigurierbare Anzeige zum Anzeigen der jeweiligen Codierung 101251, 101252, 101253. Die konfigurierbaren Anzeigen werden über die Energiespeichereinrichtung mit elektrischer Energie versorgt.

Das in Bezug auf die Fig. 6a beschriebene Haltemittel 1012 stellt eine eigene beanspruchbare Erfindung dar.

Die **Fig. 6b** zeigt ebenfalls in einer Ansicht in vertikaler Richtung von oben nach unten einen Ausschnitt der Auflageeinrichtung 10 und zwar den ersten Teilbereich 10a. Auf der Konsole 101 ist ein erstes Haltemittel 1012 nach einer der Ausgestaltungen, die in Bezug zur Fig. 6a beschrieben wurden, aufgesetzt und positioniert. Auf der Konsole 102 ist ein zweites Haltemittel 1021 nach einer der Ausgestaltungen, die in Bezug zur Fig. 6a beschrieben wurden, aufgesetzt und positioniert. Die Positionierung der Haltemittel 1012, 1021 kann beispielsweise dadurch erfolgen, dass die Steuerungseinrichtung 13 die Anzeigeeinrichtung 12 derart ansteuert, dass bei den Lichtbänder 132, 133 solche Leuchtmittel mit einem der oben beschriebenen Leuchteffekten zur Anzeige einer der Codierungen 101251, 101252, 101253 neben dem jeweiligen Haltemittel 1012, 1021 aufleuchten, wo der Bediener das jeweilige Haltemittel 1012, 1021 positionieren soll.

Ferner wird die Anzeigeeinrichtung 12 mittels der Steuerungseinrichtung 13 derart angesteuert, dass die Anzeigeeinrichtung 12 dem Bediener eine Soll-Winkelposition der Drehvorrichtung 10122 des jeweiligen Haltemittels 1012, 1021 über eine der Codierungen 101251, 101252, 101253 signalisiert. Hierzu leuchtet bevorzugt jeweils mindestens eines der Leuchtmittel mit der entsprechenden Codierung 101251, 101252, 101253 auf, welches sich neben dem jeweiligen Haltemittel 1012, 1021. Alternativ kann auch ein Leuchtmittel aufleuchten, welches sich in einer gedachten Verlängerung des jeweiligen Haltemittels 1012, 1021 befindet.

In Fig. 6b ist dies durch eine Art horizontales Backsteinmuster bzw. eine Art schräges Backsteinmuster bei den betreffenden Leuchtmitteln angedeutet. Ferner ist die Position des betreffenden Leuchtmittels jeweils durch Klammern mit Bezugszeichen A1, A2 für die jeweilige Codierung 101251, 101252, 101253 der Soll-Winkelposition Q in Fig. 6b gekennzeichnet.

Die übrigen Leuchtmittel des ersten Lichtbandes 130 und der zweiten Lichtbänder 132, 133 sind bevorzugt ausgeschaltet, um Energie zu sparen.

Die **Fig. 7a** zeigt ebenfalls in einer Ansicht in vertikaler Richtung von oben nach unten einen Ausschnitt der Auflageeinrichtung 10 und zwar den ersten Teilbereich 10a zu einem ersten Zeitpunkt. Ein Werkstück 2 liegt auf nicht dargestellten verdeckten Haltemitteln der Konsolen 101, 102 auf. Die Anzeigeeinrichtung 12 wird mittels der Steuerungseinrichtung 13 derart angesteuert, dass die Anzeigeeinrichtung 12 dem Bediener eine Drehachse RA1, RA2 zum Wenden des Werkstücks 2 signalisiert. Das Wenden des Werkstücks 2 ist insbesondere nötig, wenn das Werkstück 2 gemäß der vordefinierten Prozessparameter auf beiden Hauptflächen des Werkstücks 2 bearbeitet werden soll.

Als Hauptflächen des in der Regel quaderförmigen Werkstücks 2 gelten in der Regel jene zwei sich gegenüberliegende Flächen, die den größten Flächeninhalt haben. Die anderen vier Flächen begrenzen die zwei Hauptflächen und werden üblicherweise als Schmalflächen bezeichnet.

Bevorzugt werden jene Leuchtmittel der Anzeigeeinrichtung 12 mit einem der oben beschriebenen Leuchteffekte zum Leuchten gebracht, die sich in einer Verlängerung einer zentral das Werkstück 2 kreuzenden Drehachse RA1, RA2 befinden, die in Fig. 7b als gestrichelte Linien eingezeichnet sind. Dabei leuchten bevorzugt zu Beginn dieser vordefinierten Handhabungsaktion jene Leuchtmittel auf, die in der in Fig. 7b dargestellten Aufsicht direkt von der jeweiligen Drehachse RA1, RA2 geschnitten werden und/oder die direkt benachbart zu der jeweiligen Drehachse RA1, RA2 sind. In Fig. 7a ist dies durch eine schwarze Füllung bei den betreffenden Leuchtmitteln angedeutet. Ferner sind die Positionen der betreffenden Leuchtmittel durch Klammern mit den Bezugszeichen A3a, A4a in Fig. 7a gekennzeichnet, die zu Beginn dieser vordefinierten Handhabungsaktion aufleuchten.

Die übrigen Leuchtmittel des ersten Lichtbandes 130 und des zumindest eines zweiten Lichtbandes 132 sind bevorzugt ausgeschaltet, um Energie zu sparen.

Die **Fig. 7b** zeigt ebenfalls in einer Ansicht in vertikaler Richtung von oben nach unten einen Ausschnitt der Auflageeinrichtung 10 und zwar den ersten Teilbereich 10a zu einem zweiten späteren Zeitpunkt. Dabei leuchten bevorzugt nun weitere Leuchtmittel auf, die benachbart zu jenen Leuchtmitteln sind, die bereits zum ersten Zeitpunkt aufgeleuchtet haben. In Fig. 7b ist dies durch eine schwarze Füllung bei den betreffenden Leuchtmitteln angedeutet.

Ferner sind die Positionen der betreffenden Leuchtmittel durch Klammern mit den Bezugszeichen A3b, A4b in Fig. 7b gekennzeichnet, die zu Beginn dieser vordefinierten Handhabungsaktion aufleuchten.

Die übrigen Leuchtmittel des ersten Lichtbandes 130 und des zumindest eines zweiten Lichtbandes 132 sind bevorzugt ausgeschaltet, um Energie zu sparen.

Zu einem späteren nicht dargestellten Zeitpunkt können weitere Leuchtmittel der optischen Anzeigeeinrichtung 12 zum Leuchten gebracht werden, so dass bevorzugt eine Art gegensätzliches Lauflicht entsteht. Dies ist durch Pfeile 201, 202, 203, 204 in der Fig. 7b angedeutet. Alternativ kann auch ein Lauflicht generiert werden, dass vor dem entsprechenden Lichtband stehend von links nach rechts oder von rechts nach links verläuft. Auch ein statisches Aufleuchten mit einem der oben beschriebenen Leuchtmuster für die Anzeige der jeweiligen Drehachse RA1, RA2 ist denkbar.

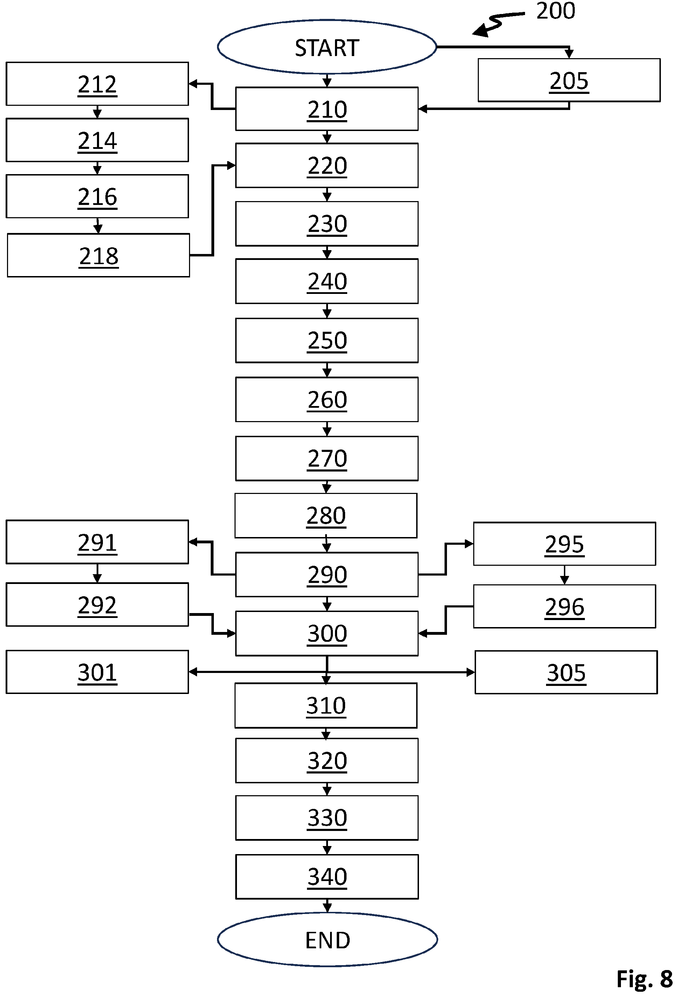

Die **Fig. 8** zeigt schematisch ein Ablaufdiagramm eines Verfahrens 200 zum Bearbeiten der Werkstücke 2, 3, die insbesondere aus Holz oder Holzwerkstoffen bestehen können. Zur Durchführung des Verfahrens 200 kann die oben beschriebene Maschine 1 in den verschiedenen angegebenen Varianten zum Einsatz kommen. Die Reihenfolge der nachfolgend beschriebenen Schritte ist nur beispielhaft angegeben. Wo es sinnvoll und praktikabel ist, kann von der angegebenen Reihenfolge in alternativen Varianten des Verfahrens 300 abgewichen werden. Einige der im Folgenden beschriebenen Schritte können auch ausgelassen werden, wenn diese Schritte für das nächste zu bearbeitende Werkstück 2, 3 nicht erforderlich sind. Das Verfahren 200 umfasst die folgenden Schritte:
- Anzeigen 240 einer Handhabungsaktion für einen Bediener in Form einer Soll-Position mindestens eines Haltemittels 1011, 1012, 1021, 1022, 1031, 1032, 1041, 1042, 1051, 1052, 1061, 1062 zum Stützen und bevorzugt Fixieren Werkstücke 2, 3 insbesondere mittels der optischen Anzeigeeinrichtung 12,
- insbesondere Anzeigen 220 einer Handhabungsaktion für einen Bediener in Form einer Soll-Position mindestens einer Konsole 101, 102, 103, 104, 105, 106 einer Auflageeinrichtung 10 insbesondere mittels der optischen Anzeigeeinrichtung 12,
- Positionieren 250 der mindestens einen Haltemittels 1011, 1012, 1021, 1022, 1031, 1032, 1041, 1042, 1051, 1052, 1061, 1062 an der Soll-Position,
- Anzeigen 210, 260, 270, 280 mindestens einer weiteren weiteren Handhabungsaktion für den Bediener mittels der optischen Anzeigeeinrichtung 12,
- Durchführen 212, 214, 216, 218, 270, 290 der mindestens einer weiteren weiteren angezeigten Handhabungsaktion,
- Positionieren 300 des Werkstücks 2, 3 auf dem mindestens einen Haltemittel 1011, 1012, 1021, 1022, 1031, 1032, 1041, 1042, 1051, 1052, 1061, 1062, und
- Bearbeiten 310 des Werkstücks 2, 3 mittels eines Bearbeitungswerkzeugs 111, 112, 113.

In einer bevorzugten Ausführungsform umfasst das Verfahren 200 ferner die Schritte:
- Anzeigen 220 einer Handhabungsaktion für einen Bediener in Form einer Soll-Position mindestens einer Konsole 101, 102, 103, 104, 105, 106 einer Auflageeinrichtung 10 insbesondere mittels der optischen Anzeigeeinrichtung 12, und
- Positionieren 230 der mindestens einen Konsole 101, 102, 103, 104, 105, 106 an der Soll-Position.

In einer weiteren bevorzugten Ausführungsform umfasst das Verfahren 200 ferner den Schritt Anzeigen 320 einer noch weiteren Handhabungsaktion mittels der optischen Anzeigeeinrichtung 12 für den Bediener undinsbesondere Durchführen 330 der noch weiteren Handhabungsaktion für eine ggf. erforderliche weitere Bearbeitung 340 des Werkstücks 2, 3.

Bevorzugt umfasst das Anzeigen 210, 260, 270, 280 der mindestens einer weiteren weiteren Handhabungsaktion und das Anzeigen 320 der noch weiteren Handhabungsaktion mindestens eine der folgenden Handhabungsaktionen:
- erste Position P1a, P1b auf der Auflageeinrichtung 10 des Rohteils 2a und zweite Position P2a, P2b auf der Auflageeinrichtung 10 des Fertigteils 2b des Werkstücks 2,
- Position P3a, P3b auf der Auflageeinrichtung 10 des bevorzugt vom Bediener zu haltenden Distanzwerkstücks 6 für das Werkstück 3 in Bezug auf den mindestens einen Anschlag 1013, 1023 der Auflageeinrichtung 10,
- Art T1, T2 des Aufsatzelements 10132, 110133 des Anschlags 1013 der Auflageeinrichtung 10,
- Position P4a, P4b des abragenden Distanzteils 101333 des Anschlags 1013 der Auflageeinrichtung 10,
- Angabe A1, A2 des Soll-Drehwinkelposition des auf der Auflageeinrichtung 10 angeordneten Haltemittels 1012, 1021,
- Angabe A3, A4 der Drehachse RA1, RA2 zum Wenden des Werkstücks 2.

In einer weiteren bevorzugten Ausführungsform des Verfahrens 200 in Abhängigkeit von der zusätzlich angezeigten Handhabungsaktion umfasst das Verfahren 200 ferner den Schritt Verwenden 290 mindestens eines Distanzmittels 6, 10133 zwischen dem mindestens einen Anschlag 1013, 1023 und dem Werkstück 2, 3 zum Ausrichten und/oder Positionieren 300 des Werkstücks 2, 3, wobei das mindestens eine Distanzmittel 6, 10133 das Distanzwerkstück 6 oder das abragende Distanzteil 101333 ist.

Im Fall der Anzeige der Position P4a, P4b des abragenden Distanzteils 101333 umfasst das Verfahren 200 bevorzugt ferner die folgenden Schritte:
- Ausfahren 291 des mindestens einen Anschlags 1013, 1023 bevorzugt aus der Konsole 101, 102, 103, 104, 105, 106 der Auflageeinrichtung 10 zum Ausrichten und/oder Positionieren des Werkstücks 2, 3,
- Ausrichten 292 des Distanzteils 101333, und
- Einfahren 301 des mindestens einen Anschlags 1013, 1023.

Im Fall der Anzeige der Position P3a, P3b des Distanzwerkstücks 6 umfasst das Verfahren 200 bevorzugt ferner die folgenden Schritte:
- Greifen 295 des Distanzwerkstücks 6,
- Halten 296 des Distanzwerkstücks 6 an der angezeigten Position P3a, P3b, und
- Weglegen 305 des Distanzwerkstücks 6.

Im Fall der Anzeige der Art T1, T2 des Aufsatzelements 10132, 110133 umfasst das Verfahren 200 ferner bevorzugt die folgenden Schritte:
- Ausfahren 212 des mindestens einen Anschlags 1013, 1023 bevorzugt aus der Konsole 101, 102, 103, 104, 105, 106 zum Umrüsten des Aufsatzes 10132, 110133 des mindestens einen Anschlags 1013, 1023,
- Abmontieren 214 des vorhandenen Aufsatzelements 10132, 110133 einer ersten Art,
- Befestigen 216 eines Aufsatzelements 10132, 110133 einer zweiten Art, und
- Einfahren 218 des mindestens einen Anschlags 1013, 1023.

Im Fall der Anzeige der Drehachse RA1, RA2 umfasst das Bearbeiten 310, 340 des Werkstücks 2, 3 bevorzugt die folgenden Teilschritte:
- Bearbeiten 310 des Werkstücks 2, 3 auf der ersten Hauptfläche,
- Wenden 330 des Werkstücks 2, 3 um 180° gemäß der angezeigten Drehachse RA1, RA2, und
- Bearbeiten 340 des Werkstücks 2, 3 auf der zweiten der ersten Hauptfläche gegenüberliegenden Hauptfläche.

In einer bevorzugten Ausführungsform umfasst das Verfahren 200 ferner den Schritt Auswählen bzw. Vorgeben 205 mindestens eines Leuchteffekts für eine der vordefinierten Handhabungsaktionen für die optische Anzeigeeinrichtung 12, für eine Gruppe von den oben beschriebenen Leuchtmitteln 1301, 1032, 1321, 1322, 1331, 1332 der optischem Anzeigeeinrichtung 12, und/oder für einzelne der Leuchtmittel 1301, 1032, 1321, 1322, 1331, 1332 der optischem Anzeigeeinrichtung 12.

In einer weiteren Ausführungsform ist die Steuerungseinrichtung 13 ferner eingerichtet, mindestens eine der folgenden Funktionen und/oder Handhabungsaktionen über die optische Anzeigeeinrichtung 12 anzeigen zu lassen bzw. umfasst das Verfahren 300 ferner weitere Schritte zum Anzeigen der folgenden Informationen, Funktionen und/oder Handhabungsaktionen:
- Anzeige einer anzufahrenden Position,
- Anzeige einer Bauform und/oder einer Bauhöhe und/oder einer Größe und/oder einer Soll-Ausrichtung und/oder eines Typs eines der Haltemittel 1011, 1012, 1021, 1022, 1031, 1032, 1041, 1042, 1051, 1052, 1061, 1062,
- Anzeige der einzunehmenden Position eines halbseitigen Haltefeldes eines der Haltemittel 1011, 1012, 1021, 1022, 1031, 1032, 1041, 1042, 1051, 1052, 1061, 1062,
- Anzeige eines Spannstatus eines der Haltemittel 1011, 1012, 1021, 1022, 1031, 1032, 1041, 1042, 1051, 1052, 1061, 1062 wie "offen", "geklemmt" bzw. "angesaugt",
- Spannmittel nicht positioniert; Spannmittel fixiert,
- Anzeige eines Maschinenstatus wie "Maschine 1 blockiert", "Teilbereich 10a, 10b blockiert", "Maschine 1 bereit", "Teilbereich 10a, 10b bereit",
- Anzeige einer Störung der Maschine 1,
- Anzeige einer Zentralposition der Auflagefläche eines der Haltemittel 1011, 1012, 1021, 1022, 1031, 1032, 1041, 1042, 1051, 1052, 1061, 1062,
- Anzeige von Arbeitsvorgängen und Arbeitsabläufen der Maschine 1,
- Anzeige von verschiedenen Betriebszuständen der Maschine 1,
- Anzeige der Position eines der Bearbeitungswerkzeuge 111, 112, 113,
- Anzeige einer fertigen Bearbeitung des Werkstücks 2, 3,
- Anzeige einer Richtung, in der das Werkstück 2, 3 bewegt werden soll,
- Anzeige eines Bereichs, wo sich der Bediener aufhalten darf oder nicht aufhalten darf.

Die Fig. 9 zeigt analog zu Fig. 2 in einer Ansicht in vertikaler Richtung von oben nach unten eine weitere bevorzugte Ausführungsform einer optischen Anzeigeeinrichtung 12-1 und einer Auflageeinrichtung 10-1. Die optische Anzeigeeinrichtung 12-1 umfasst im Gegensatz zur optischen Anzeigeeinrichtung 12 anstelle zweier Teilbänder 130a, 130b ein zusammenhängendes Lichtband 130 entlang der x-Achse der Auflageeinrichtung 10-1. An den Konsolen 101, 102, 103, 104, 105, 106 ist jeweils an der Längsseite parallel zur y-Ache eine in der Vertikalen verstellbare Einlegehilfsvorrichtung 115a, 115b, 115c, 115d, 115e, 115f angeordnet. Die Einlegehilfsvorrichtungen 115a, 115b, 115c, 115d, 115e, 115f können in der Vertikalen beispielsweise 5 mm weiter nach oben automatisiert verfahren werden als das Höhenniveau der Auflageflächen der Haltemittel 1011, 1012, 1021, 1022, 1031, 1032, 1041, 1042, 1051, 1052, 1061, 1062 ist. Somit kann ein großes Werkstück 2, 3 zunächst auf einer planaren gleitfähigen Oberfläche der Einlegehilfsvorrichtungen 115a, 115b, 115c, 115d, 115e, 115f abgelegt und verschoben werden. Anschließend platziert der Bediener B die Haltemittel 1011, 1012, 1021, 1022, 1031, 1032, 1041, 1042, 1051, 1052, 1061, 1062 unter das jeweilige Werkstück 2, 3 an der vorgesehenen angezeigten Sollposition. Anschließend werden die Einlegehilfsvorrichtungen 115a, 115b, 115c, 115d, 115e, 115f nach unten abgesenkt, so dass das jeweilige Werkstück 2, 3 von den jeweiligen Haltemittel 1011, 1012, 1021, 1022, 1031, 1032, 1041, 1042, 1051, 1052, 1061, 1062 abgestützt wird. Ansonsten sind die Auflageeinrichtung 10-1 und die optische Anzeigeeinrichtung 12-1 identisch zur Ausführungsform der **Fig. 2****.**

Die Auflageeinrichtung 10-1 umfasst bevorzugt an jener Seite, von der ein Bediener B die Maschine 1 üblicherweise bedient, eine kontaktlose Schaltereinrichtung 123. Mit der kontaktlosen Schaltereinrichtung 123 kann der Bediener B beispielsweise die Anschläge 1013, 1023 in dem Teilbereich 10a aktivieren (siehe Fig. 4) und insbesondere in eine Arbeitsposition bevorzugt vertikal nach oben fahren bzw. deaktivieren und in eine Ruheposition bevorzugt vertikal nach unten fahren, ohne ein Werkstück aus den Händen nehmen zu müssen oder zu einem Bedienterminal gehen zu müssen. Mit der kontaktlosen Schaltereinrichtung 123 kann der Bediener B bevorzugt zusätzlich oder alternativ ein Spannen der Werkstücke 2, 3 auf der Auflageeinrichtung 10-1 aktivieren bzw. deaktivieren, ohne ein weiteres Werkstück aus den Händen nehmen zu müssen oder zu einem Bedienterminal gehen zu müssen. Mit der kontaktlosen Schaltereinrichtung 123 kann der Bediener B weiter bevorzugt zusätzlich oder alternativ weitere Funktionen wie die Einlegehilfsvorrichtungen 115a, 115b, 115c, 115d, 115e, 115f für einen der Teilbereiche 10a, 10b der Auflageeinrichtung 10-1 aktivieren bzw. deaktivieren, ohne das Werkstück 2, 3 aus den Händen nehmen zu müssen oder zu einem Bedienterminal gehen zu müssen.

Die kontaktlose Schaltereinrichtung 123 ist bevorzugt in Fuß- oder Kniehöhe des Bedieners B an der Stützstruktur 100 der Auflageeinrichtung 10-1 angeordnet, so dass der Bediener B die kontaktlose Schaltereinrichtung 123 aus einer für den Bediener B ergonomisch vorteilhaften Haltung mittels eines Fußes oder eines Knies bedienen kann.

Die kontaktlose Schaltereinrichtung 123 umfasst in einer ersten in Fig. 9 dargestellten Ausführungsform eine kombinierte Sende- und Empfangseinheit 125, die bevorzugt an einem Ende der Auflageeinrichtung 10-1 in x-Richtung angeordnet ist. Alternativ kann die kontaktlose Schaltereinrichtung 123 umfasst in einer zweiten nicht in den Zeichnungen dargestellten Ausführungsform eine Sendeeinheit und eine von der Sendeeinheit getrennte Empfangseinheit umfassen, die bevorzugt an gegenüberliegenden Enden der Auflageeinrichtung 10-1 in x-Richtung angeordnet sind.

Von der Sende- und Empfangseinheit 125 wird beispielsweise eine mit einer Schwingungsfrequenz konstante und mit einer Amplitude konstante elektromagnetische Welle oder akustische Welle bevorzugt gerichtet entlang der Auflageeinrichtung 10-1 in x-Richtung ausgestrahlt. Dringt nun ein Körperteil K des Bedieners B in einen Erfassungsbereich 120 der kontaktlosen Schaltereinrichtung 123 und somit in den Ausbreitungsweg der von der Sende- und Empfangseinheit 125 angestrahlten elektromagnetischen Welle, dann wird ein Teil der elektromagnetischen Welle von dem Körperteil reflektiert und zur Sende- und Empfangseinheit 125 zurückgesendet und dort detektiert. Im Fall einer monochromatischen elektromagnetischen Welle kann aus der empfangenen reflektierten Welle bevorzugt die Entfernung von der Sende- und Empfangseinheit 125 zu dem Körperteil und damit die Position des Körperteils entlang der Auflageeinrichtung 10-1 in x-Richtung ermittelt werden. Eine solche Position kann beispielsweise im Falle eines Laserstrahls als elektromagnetische Welle ein Distanzsensor wie beispielsweise der DT35-Sensor der Sick AG sein.

Damit der Bediener B nicht unbewusst die kontaktlose Schaltereinrichtung 123 bereits durch seine Anwesenheit neben der Stützstruktur 100 betätigt, schaltet die Schaltereinrichtung 123 bevorzugt nur dann, wenn die reflektierte Welle einen vordefinierten Amplitudenwert erreicht oder übersteigt.

Die kontaktlose Schaltereinrichtung 123 kann alternativ anstelle eines Erfassungsbereiches mehrere in x-Richtung nebeneinander angeordnete Erfassungsbereiche und bevorzugt einen Erfassungsbereich pro Teilbereich 10a, 10b umfassen, denen jeweils eine Sendeeinheit und Empfangseinheit zugeordnet ist, die voneinander separiert sind (also in eigenen dedizierten Gehäusen untergebracht sind). Die kontaktlose Schaltereinrichtung 123 kann alternativ mehrere in x-Richtung nebeneinander angeordnete Erfassungsbereiche umfassen, denen jeweils eine eigene kombinierte Sende- und Empfangseinheit (also in einem gemeinsamen Gehäuse untergebracht sind) zugeordnet ist.

Die kombinierten Sende- und Empfangseinheiten sind beispielsweise kombinierte Lasersende- und Empfangseinheiten wie der oben genannte DT35-Sensor oder nebeneinander angeordnete elektromagnetische Spulen. Der Bediener B trägt hierzu aufgrund von Sicherheitsbestimmungen im Produktionsbereich, wo die Maschine 1 steht, Schuhe mit Kappen bevorzugt aus einem unlegierten und ferritischen oder martensitischen Edelstahl (z.B. AISI 430, 410). Dies kann dazu ausgenutzt werden, dass der Fuß den Bedieners B bei jener elektromagnetischen Spule erkannt und angenommen wird, wo das elektromagnetische Feld am stärksten durch die Annäherung der Stahlkappe des Schuhs verändert wird. Analog könnte der Bediener B eine Hose einer Arbeitskleidung tragen, bei der im Bereich der Knie ein analoges Stahlmaterial eingenäht ist.

In einer weiteren Ausführungsform werden die Leuchtmittel des Lichtbandes 130 dazu verwendet, dem Bediener B eine Sollposition 124 anzuzeigen, wo der Bediener B mit einem Körperteil K in den Erfassungsbereich 120 oder in einen von mehreren Erfassungsbereichen eindringen soll, so dass eine Vakuumansaugung für eines der Werkstücke 2, 3 an zuordneten Konsolen 101, 102, 103, 104, 105, 106 und zugeordneten Haltemitteln 1011, 1012, 1021, 1022, 1031, 1032, 1041, 1042, 1051, 1052, 1061, 1062 für das betreffende Werkstück 2, 3 aktiviert bzw. deaktiviert wird.

In einer weiteren Ausführungsform werden die Leuchtmittel des Lichtbandes 130 dazu verwendet, dem Bediener B eine Sollposition 124 anzuzeigen, wo der Bediener B mit einem Körperteil K in den Erfassungsbereich 120 oder in einen von mehreren Erfassungsbereichen eindringen soll, so dass Anschläge 1013, 1023 für das jeweilige Werkstück 2, 3 ausgefahren werden (siehe auch Fig. 4).

In einer weiteren Ausführungsform werden die Leuchtmittel des Lichtbandes 130 dazu verwendet, dem Bediener B eine Sollposition 124 anzuzeigen, wo der Bediener B mit einem Körperteil K in den Erfassungsbereich 120 oder in einen von mehreren Erfassungsbereichen eindringen soll, so dass die Einlegehilfsvorrichtungen 115a, 115b, 115c, 115d, 115e, 115f eines betreffenden Teilbereichs 10a, 10b aktiviert (entspricht einer angehobenen Position) bzw. deaktiviert (entspricht einer abgesenkten Position) werden.

Die Steuerungseinrichtung 13 ist eingerichtet, zum Beispiel entsprechend des vorgesehenen nächsten Prozessschrittes zu einem vordefinierten Zeitpunkt zum einen die kontaktlose Erfassungseinrichtung 123 zu aktivieren und bevorzugt gleichzeitig die optische Anzeigeeinrichtung 12-1 entsprechend von der Steuerungseinrichtung 13 für die Anzeige einer Handhabungsaktion an den Bediener B anzusteuern.

Hierzu leuchtet beispielsweise mindestens ein Leuchtmittel des Lichtbandes 130 direkt benachbart zu der Sollposition 124 auf, wo der Bediener B mit dem Körperteil K in den Erfassungsbereich 120 oder in einen von mehreren Erfassungsbereichen (wie beispielsweise im Fall einer Verwendung von elektromagnetischen Spulen zur Detektion einer Position des Körperteils K) eindringen soll.

### BEZUGSZEICHENLISTE

- 1: Maschine
- 2, 3: Werkstück
- 4: Internet
- 5: Bedienerterminal
- 6: Distanzwerkstück
- 10: Auflageeinrichtung
- 10a, 10b: Teilbereiche der Auflageeinrichtung
- 11: Bearbeitungseinrichtung
- 12, 12-1: optische Anzeigeeinrichtung
- 13: Steuerungseinrichtung
- 14: Bedienerschnittstelle
- 15: externe Schnittstelle
- 100: Stützstruktur
- 101, 102, 103, 104, 105, 106: Konsolen
- 110: Pfeil mit entgegengesetzter Richtungsanzeige
- 111, 112, 113: Bearbeitungswerkzeug
- 115a, 115b, 115c, 115d, 115e, 115f: Einlegehilfsvorrichtung
- 120: Erfassungsbereich
- 123: kontaktlose Schaltereinrichtung
- 124: Sollposition
- 125: kombinierte Sende- und Empfangseinheit
- 130: erstes Lichtband
- 130a, 130b: Teillichtbänder
- 132, 133, 134, 135, 136, 137: zweite Lichtbänder
- 1010, 1020, 1030, 1040, 1050, 1060: Pfeile mit entgegengesetzter Richtungsanzeige
- 1011, 1012, 1021, 1022, 1031, 1032: erste Gruppe von Haltemitteln
- 10121: Basiskörper
- 10122: Drehvorrichtung
- 10123: Markierung
- 10124: Haltekörper
- 10125: Codierungssystem
- 101251, 101252, 101253: Codierungen von Soll-Winkelpositionen
- 1013, 1023: Anschläge
- 10131: Grundkörper
- 10132: erstes Aufsatzelement
- 10133: zweites Aufsatzelement
- 101331: Haltekörper
- 101332: Drehachse
- 101333: Distanzteil
- 1041, 1042, 1051, 1052, 1061, 1062: zweite Gruppe von Haltemitteln
- 1110, 1120, 1130: Pfeile mit entgegengesetzter Richtungsanzeige
- 1301, 1302: erste Leuchtmittel
- 1321, 1322, 1331, 1332: zweite Leuchtmittel
- 200: Verfahren
- 205: Auswählen bzw. Vorgeben mindestens eines Leuchteffekts
- 210: Anzeigen Art eines Aufsatzelements
- 212: Ausfahren des Anschlags
- 214: Abmontieren vorhandenes Aufsatzelement erster Art
- 216: Befestigen anderes Aufsatzelement zweiter Art
- 218: Einfahren des Anschlags
- 220: Anzeigen einer Soll-Position mindestens einer Konsole
- 230: Positionierung der mindestens einen Konsole
- 240: Anzeigen einer Soll-Position mindestens eines Haltemittels
- 250: Positionierung des mindestens einen Haltemittels
- 260: Anzeige einer Soll-Winkelposition mindestens eines Haltemittels
- 270: Einstellen der Soll-Winkelposition
- 280: Anzeige Distanzmittel
- 290: Verwenden des Distanzmittels
- 291: Ausfahren Anschlag
- 292: Ausrichten Anschlagselement
- 295: Greifen eines Distanzwerkstücks
- 296: Halten des Distanzwerkstücks an Anschlag
- 300: Positionieren Werkstück
- 301: Einfahren Anschlag
- 305: Weglegen Distanzwerkstück
- 310: Bearbeiten Werkstück
- 320: Anzeigen Drehachse
- 330: Wenden des Werkstücks
- 340: Weiteres Bearbeiten des Werkstücks
- A1, A2: Codierungen von Soll-Drehwinkelpositionen
- A3a, A4a: Positionen der zu Beginn leuchtenden Leuchtmittel
- A3b, A4b: Positionen der zu einem späteren Zeitpunkt leuchtenden Leuchtmittel
- P1a, P1b: Soll-Positionen eines Rohteils
- P2a, P2b: Ziel-Positionen eines Fertigteils
- P3a, P3b: Soll-Positionen eines Distanzwerkstück
- P4a, P4b: Soll-Positionen eines Distanzteils eines Anschlags
- Q: Soll-Winkelposition
- RA1, RA2: Drehachsen
- T1a, T1b: erster Soll-Typ eines Aufsatzelements eines Anschlags
- T2a, T2b: zweiter Soll-Typ eines Aufsatzelements eines Anschlags
- X: Längsrichtung
- Y: Querrichtung
- Z: Höhenrichtung
- B: Bediener
- K: Körperteil

## Patentansprüche

1. Maschine (1) zum Bearbeiten von Werkstücken (2, 3) insbesondere aus Holz oder Holzwerkstoffen umfassend:
- eine Auflageeinrichtung (10, 10-1) für die Werkstücke (2, 3) umfassend
∘ eine in einer Längsrichtung (X) und in einer dazu senkrechten Querrichtung (Y) sich erstreckende Stützstruktur (100), und
∘ mindestens ein auf der Auflageeinrichtung (10, 10-1) angeordnetes Haltemittel (1011, 1012, 1021, 1022, 1031, 1032, 1041, 1042, 1051, 1052, 1061, 1062), insbesondere ein Blocksauger, für ein Abstützen und insbesondere Fixieren der Werkstücke (2, 3),
- eine Bearbeitungseinrichtung (11) für eine Bearbeitung der Werkstücke (2, 3),
- eine optische Anzeigeeinrichtung (12, 12-1) für eine Anzeige von Handhabungsaktionen für einen Bediener (B) der Maschine (1) in Form mindestens einer Sollposition für das mindestens eine Haltemittel (1011, 1012, 1021, 1022, 1031, 1032, 1041, 1042, 1051, 1052, 1061, 1062), und
- eine Steuerungseinrichtung (13) zum Steuern der Bearbeitungseinrichtung (11) und der optischen Anzeigeeinrichtung (12, 12-1),
**dadurch gekennzeichnet, dass** die Steuerungseinrichtung (13) eingerichtet ist, mindestens eine weitere vordefinierte Handhabungsaktion dem Bediener (B) mittels der optische Anzeigeeinrichtung (12, 12-1) anzuzeigen.

2. Maschine (1) nach Anspruch 1, wobei die mindestens eine weitere vordefinierte Handhabungsaktion auf einer Anzeige einer der folgenden Informationen beruht:
- eine erste Soll-Position (P1a, P1b) auf der Auflageeinrichtung (10) für ein Rohteil (2a) eines Werkstücks (2) und eine zweite Ziel-Position (P2a, P2b) auf der Auflageeinrichtung (10) für ein Fertigteil (2b) des Werkstücks (2),
- eine Soll-Position (P3a, P3b) auf der Auflageeinrichtung (10) für ein Distanzwerkstück (6) zwischen der Position mindestens eines Anschlags (1013, 1023) der Auflageeinrichtung (10) und einer Soll-Position (P1a, P1b) eines Werkstücks (3),
- eine Soll-Art (T1, T2) eines Aufsatzelementes (10132, 110133) eines Anschlags (1013) der Auflageeinrichtung (10),
- eine Soll-Position (P4a, P4b) eines abragenden Distanzteils (101333) eines Anschlags (1013) der Auflageeinrichtung (10),
- eine Soll-Winkelposition (Q) des mindestens einen Haltemittels (1012, 1021),
- eine Soll-Drehachse (RA1, RA2) zum Wenden eines Werkstücks (2),
- ein Erreichen bzw. ein Nicht-Erreichen einer vordefinierten Fixierkraft bei einem der Haltemittel (1011, 1012, 1021, 1022, 1031, 1032, 1041, 1042, 1051, 1052, 1061, 1062),
- ein Erfüllen bzw. ein Nicht-Erfüllen einer vordefinierten Soll-Ladung einer Batterie bzw. eines Akkus bei einem der Haltemittel (1011, 1012, 1021, 1022, 1031, 1032, 1041, 1042, 1051, 1052, 1061, 1062),
- ein Überschreiten bzw. ein Nicht-Überschreiten einer vordefinierten maximalen Schwingungsamplitude eines Werkstücks (2, 3) im Bereich eines der Haltemittel (1011, 1012, 1021, 1022, 1031, 1032, 1041, 1042, 1051, 1052, 1061, 1062),
- eine Soll-Position (124), die der Bediener (B) mit einem Körperteil (K) einnehmen soll, so dass eine Vakuumansaugung für eines der Werkstücke (2, 3) an zuordneten Konsolen (101, 102, 103, 104, 105, 106) und zugeordneten Haltemitteln (1011, 1012, 1021, 1022, 1031, 1032, 1041, 1042, 1051, 1052, 1061, 1062) aktiviert bzw. deaktiviert wird,
- eine Soll-Position (124), die der Bediener (B) mit einem Körperteil (K) einnehmen soll, so dass mindestens ein Anschlag (1013, 1023) für eines der Werkstücke (2, 3) aktiviert bzw. deaktiviert wird,
- eine Soll-Position (124), die der Bediener (B) mit einem Körperteil (K) einnehmen soll, so dass mindestens eine Einlegehilfsvorrichtung (115a, 115b, 115c, 115d, 115e, 115f) für ein Werkstück (2, 3) aktiviert bzw. deaktiviert wird.
- ein Erreichen bzw. ein Nicht-Erreichen eines vordefinierten Vakuumluftdrucks bei einer der Konsolen (101, 102, 103, 104, 105, 106),
- eine Restlaufzeit eines aktiven Bearbeitungsprogramms der Maschine (1) bevorzugt in Form eines Fortschrittbalkens,
und wobei die Steuerungseinrichtung (13) eingerichtet ist, die optische Anzeigeeinrichtung (12) in Abhängigkeit von vordefinierten Prozessparametern eines zu bearbeitenden Werkstücks (2, 3) anzusteuern und/oder in Abhängigkeit eines aktuellen Prozessschritts anzusteuern.

3. Maschine (1) nach einem der vorangehenden Ansprüche, wobei die optische Anzeigeeinrichtung (12, 12-1) mindestens ein erstes Lichtband (130, 131) umfasst, dass an der Stützstruktur (100) in der Längsrichtung (X) der Auflageeinrichtung (10, 10-) angeordnet ist, wobei die Auflageeinrichtung (10, 10-1) mindestens eine an der Stützstruktur (100) angeordnete und sich in der Querrichtung (Y) erstreckende Konsole (101, 102, 103, 104, 105, 106) umfasst und wobei die optische Anzeigeeinrichtung (12) ferner mindestens ein zweites Lichtband (132, 133, 134, 135, 136, 137) umfasst, dass an der mindestens einen Konsole (101, 102, 103, 104, 105, 106) in der Querrichtung (Y) der Auflageeinrichtung (10, 10-1) angeordnet ist wobei bevorzugt das erste Lichtband (130, 131) und das zweite Lichtband (132, 133, 134, 135, 136, 137) jeweils eine lineare Anordnung von mehreren Leuchtmitteln (1301, 1032, 1321, 1322, 1331, 1332) umfassen, und wobei die Leuchtmittel (1301, 1032, 1321, 1322, 1331, 1332) bevorzugt RGB-Leuchtdioden sind.

4. Maschine (1) nach einem der vorangehenden Ansprüche, wobei die Steuerungseinrichtung (13) eingerichtet ist, die optische Anzeigeeinrichtung (12, 12-1) für die mindestens eine weitere vordefinierte Handhabungsaktion zum Abstrahlen mindestens einem der folgenden Leuchteffekte anzusteuern:
- erste Leuchteffekte mit unterschiedlichen Helligkeiten und/oder
- zweite Leuchteffekte mit unterschiedlichen Farben, wobei die optische Anzeigeeinrichtung (12) bevorzugt eingerichtet ist, sichtbare Strahlung in mindestens zwei Spektralbereichen abzustrahlen und wobei ein Abstand der mindestens zwei Spektralbereiche mindestens 30 nm, bevorzugt mindestens 50 nm und weiter bevorzugt mindestens 75 nm beträgt und/oder
- dritte Leuchteffekte mit unterschiedlichen Blinkmustern, und wobei die Steuerungseinrichtung (13) bevorzugt eingerichtet ist, eine flexible Zuordnung zwischen den ersten Leuchteffekten und/oder den zweiten Leuchteffekten und/oder den dritten Leuchteffekten und den vordefinierten Handhabungsaktionen zu ermöglichen.

5. Maschine (1) nach Anspruch 4, wobei die Steuerungseinrichtung (13) eine externe Schnittstelle (15) umfasst, über die per Remote-Zugriff eine flexible Zuordnung der Leuchteffekte geändert werden kann.

6. Maschine (1) nach Anspruch 4 oder 5, wobei die Maschine (1) eine Benutzerschnittstelle (14) insbesondere in der Gestalt eines berührungsempfindlichen Monitors umfasst, über die ein Bediener der Maschine (1) die flexible Zuordnung der Leuchteffekte ändern kann, und wobei die Steuerungseinrichtung (13) bevorzugt eingerichtet ist, die Benutzerschnittstelle (14) derart zu steuern, dass an der Benutzerschnittstelle (14) ein Menü für eine Anzeige und eine Änderung der flexiblen Zuordnung angezeigt wird, wobei das Menü in einer ersten Ebene eine Auswahl einer der vordefinierten Handhabungsaktionen ermöglicht, und wobei das Menü in einer zweiten Ebene eine Auswahl der Leuchteffekte für die ausgewählte vordefinierte Handhabungsaktion ermöglicht.

7. Maschine (1) nach Anspruch 6, wobei die Steuerungseinrichtung (13) eingerichtet ist, die Benutzerschnittstelle (14) derart zu steuern, dass in der zweiten Ebene oder einer dritten Ebene des Menüs ein Leuchteffekt für jedes für die ausgewählte vordefinierte Handhabungsaktion zu verwendende Leuchtmittel (1301, 1032, 1321, 1322, 1331, 1332) unabhängig von den weiteren zu verwendenden Leuchtmitteln (1301, 1032, 1321, 1322, 1331, 1332) für die ausgewählte vordefinierte Handhabungsaktion ausgewählt werden kann.

8. Maschine (1) nach einem der vorangehenden Ansprüche, wobei das mindestens eine Haltemittel (1012, 1021) einen drehbaren Grundkörper (10122) und ein Codierungssystem (10125) mit mehreren Codierungen (101251, 101252, 101253) für Winkelpositionen des drehbaren Grundkörpers (10122) umfasst und wobei die Steuerungseinrichtung (13) eingerichtet ist, die optische Anzeigeeinrichtung (12, 12-1) für eine Anzeige eines Soll-Drehwinkels des drehbaren Grundkörpers (10122) in Form einer der Codierungen (A1, A2) anzusteuern.

9. Maschine (1) nach einem der vorangehenden Ansprüche 3 bis 8, wobei die Steuerungseinrichtung (13) eingerichtet ist, die optische Anzeigeeinrichtung (12, 12-1) für die Anzeige zweier Drehachsen (RA1, RA2) zum Wenden eines Werkstücks (2) derart zu steuern, dass eine erste Drehachse (RA1) der Drehachsen (RA1, RA2) mit einem ersten Bereich (A4a) der optischen Anzeigeeinrichtung (12, 12-1) angezeigt wird, der sich am Ende einer Längserstreckung der Auflageeinrichtung (10, 10-1) befindet und eine zweite Drehachse (RA2) der Drehachsen (RA1, RA2) mit einem zweiten Bereich (A3a) der optischen Anzeigeeinrichtung (12, 12-1) angezeigt wird, der sich am Ende einer Quererstreckung der Auflageeinrichtung (10, 10-1) befindet, wobei die Steuerungseinrichtung (13) bevorzugt eingerichtet ist, die optische Anzeigeeinrichtung (12, 12-1) derart zu steuern, dass die erste Drehachse (RA1) und/oder die zweite Drehachse (RA2) mit einem Lauflicht angezeigt wird.

10. Verfahren (200) zum Bearbeiten von Werkstücken (2, 3) insbesondere aus Holz oder Holzwerkstoffen insbesondere mit einer Maschine (1) nach einem der vorangehenden Ansprüche umfassend die folgenden Schritte:
- Anzeigen (220, 240) mindestens einer Handhabungsaktion für einen Bediener in Form mindestens einer Soll-Position mindestens eines Haltemittels (1011, 1012, 1021, 1022, 1031, 1032, 1041, 1042, 1051, 1052, 1061, 1062) für die Werkstücke (2, 3) einer Auflageeinrichtung (10, 10-1),
- Positionieren (230, 250) des mindestens einen Haltemittels (1011, 1012, 1021, 1022, 1031, 1032, 1041, 1042, 1051, 1052, 1061, 1062) an der Soll-Position,
- Positionieren (300) des Werkstücks (2, 3) auf dem mindestens einen Haltemittel (1011, 1012, 1021, 1022, 1031, 1032, 1041, 1042, 1051, 1052, 1061, 1062), und
- Bearbeiten (310) des positionierten Werkstücks (2, 3) mittels eines Bearbeitungswerkzeugs (111, 112, 113),
**dadurch gekennzeichnet, dass** das Verfahren (200) ferner die folgenden Schritte umfasst
- Anzeigen (210, 260, 270, 280, 320) mindestens einer weiteren weiteren Handhabungsaktion für den Bediener, und
- Durchführen (212, 214, 216, 218, 270, 290, 330) der mindestens einer weiteren weiteren angezeigten Handhabungsaktion durch den Bediener.

11. Verfahren (200) nach Anspruch 10, wobei das Anzeigen (210, 260, 270, 280) der mindestens einer weiteren weiteren Handhabungsaktion und das Anzeigen (320) der noch weiteren Handhabungsaktion mindestens eine der folgenden Handhabungsaktionen umfasst:
• eine erste Soll-Position (P1a, P1b) auf der Auflageeinrichtung (10, 10-1) für ein Rohteil (2a) eines Werkstücks (2) und eine zweite Ziel-Position (P2a, P2b) auf der Auflageeinrichtung (10, 10-1) für ein Fertigteil (2b) des Werkstücks (2),
• eine Soll-Position (P3a, P3b) auf der Auflageeinrichtung (10, 10-1) für ein Distanzwerkstück (6) zwischen der Position mindestens eines Anschlag (1013, 1023) der Auflageeinrichtung (10, 10-1) und einer Soll-Position (P1a, P1b) eines Werkstück (3),
• eine Soll-Art (T1, T2) eines Aufsatzelementes (10132, 110133) eines Anschlags (1013) der Auflageeinrichtung (10, 10-1),
• eine Soll-Position (P4a, P4b) eines abragenden Distanzteils (101333) eines Anschlags (1013) der Auflageeinrichtung (10, 10-1),
• eine Soll-Winkelposition (Q) des mindestens einen Haltemittels (1012, 1021),
• eine Soll-Drehachse (RA1, RA2) zum Wenden eines Werkstücks (2),
• ein Erreichen bzw. ein Nicht-Erreichen einer vordefinierten Fixierkraft bei einem der Haltemittel (1011, 1012, 1021, 1022, 1031, 1032, 1041, 1042, 1051, 1052, 1061, 1062),
• ein Erfüllen bzw. ein Nicht-Erfüllen einer vordefinierten Soll-Ladung einer Batterie bzw. eines Akkus bei einem der Haltemittel (1011, 1012, 1021, 1022, 1031, 1032, 1041, 1042, 1051, 1052, 1061, 1062),
• ein Überschreiten bzw. ein Nicht-Überschreiten einer vordefinierten maximalen Schwingungsamplitude eines Werkstücks (2, 3) im Bereich eines der Haltemittel (1011, 1012, 1021, 1022, 1031, 1032, 1041, 1042, 1051, 1052, 1061, 1062),
• eine Soll-Position (124), die der Bediener (B) mit einem Körperteil (K) einnehmen soll, so dass eine Vakuumansaugung für eines der Werkstücke (2, 3) an zuordneten Konsolen (101, 102, 103, 104, 105, 106) und zugeordneten Haltemitteln (1011, 1012, 1021, 1022, 1031, 1032, 1041, 1042, 1051, 1052, 1061, 1062) aktiviert bzw. deaktiviert wird,
• eine Soll-Position (124), die der Bediener (B) mit einem Körperteil (K) einnehmen soll, so dass ein Anschlag (1013, 1023) für eines der Werkstücke (2, 3) aktiviert bzw. deaktiviert wird,
• eine Soll-Position (124), die der Bediener (B) mit einem Körperteil (K) einnehmen soll, so dass mindestens eine Einlegehilfsvorrichtung (115a, 115b, 115c, 115d, 115e, 115f) für ein Werkstück (2, 3) aktiviert bzw. deaktiviert wird.
• ein Erreichen bzw. ein Nicht-Erreichen eines vordefinierten Vakuumluftdrucks bei einer der Konsolen (101, 102, 103, 104, 105, 106),
• eine Restlaufzeit eines aktiven Bearbeitungsprogramms bevorzugt in Form eines Fortschrittbalkens.

12. Verfahren (200) nach Anspruch 10 oder 11, wobei das Verfahren (200) ferner den Schritt Verwenden (290) mindestens eines Distanzmittels (6, 10133) zwischen dem mindestens einen Anschlag (1013, 1023) und dem Werkstück (2, 3) zum Ausrichten und/oder Positionieren (300) des Werkstücks (2, 3) umfasst, wobei das mindestens eine Distanzmittel (6, 10133) das Distanzwerkstück (6) oder das abragende Distanzteil (10133) ist.

13. Verfahren (200) nach Anspruch 12, wobei das Verfahren (200) ferner die folgenden Schritte umfasst:
- Ausfahren (291) des mindestens einen Anschlags (1013, 1023) bevorzugt aus einer Konsole (101, 102, 103, 104, 105, 106) der Auflageeinrichtung (10) zum Ausrichten und/oder Positionieren des Werkstücks (2, 3),
- Ausrichten (292) des Distanzteils (101333), und
- Einfahren (301) des mindestens einen Anschlags (1013, 1023 wobei das Verfahren (200) bevorzugt ferner die folgenden Schritte umfasst:
- Greifen (295) des Distanzwerkstücks (6),
- Halten (296) des Distanzwerkstücks (6) an der angezeigten Position (P3a, P3b), und
- Weglegen (305) des Distanzwerkstücks (6).

14. Verfahren (200) nach einem der vorangehenden Ansprüche 10 bis 13, wobei das Verfahren (200) ferner die folgenden Schritte umfasst:
- Ausfahren (212) des mindestens einen Anschlags (1013, 1023) bevorzugt aus der Konsole (101, 102, 103, 104, 105, 106),
- Abmontieren (214) des an dem mindestens einen Anschlag (1013, 1023) vorhandenen Aufsatzelements (10132, 110133) einer ersten Art,
- Befestigen (216) eines Aufsatzelements (10132, 110133) einer zweiten Art an dem mindestens einen Anschlag (1013, 1023),
- Einfahren (218) des mindestens einen Anschlags (1013, 1023).

15. Verfahren (200) nach einem der vorangehenden Ansprüche 10 bis 14, wobei das Verfahren (200) ferner den Schritt Auswählen bzw. Vorgeben (205) mindestens eines Leuchteffekts für eine der vordefinierten Handhabungsaktionen für die optische Anzeigeeinrichtung (12), für eine Gruppe von Leuchtmitteln (1301, 1032, 1321, 1322, 1331, 1332) der optischem Anzeigeeinrichtung (12), und/oder einzelne Leuchtmittel (1301, 1032, 1321, 1322, 1331, 1332) der optischem Anzeigeeinrichtung (12) umfasst.
